# EUROPEAN PATENT APPLICATION

(11) **EP 4 557 561 A1**
(43) Date of publication of application: **21.05.2025**
(21) Application number: 23856581.6
(22) Date of filing: 21.08.2023
(51) Int. Cl.: H02J 7/00, H01M 10/44

(54) **POWER SUPPLY METHOD, READABLE MEDIUM AND ELECTRONIC DEVICE**

(30) Priority: 22.08.2022 CN 202211009046
(71) Applicant: Huawei Technologies Co., Ltd., Shenzhen, Guangdong 518129 (CN)
(72) Inventor: WU, Biao, Shenzhen, Guangdong 518129 (CN); CHEN, Xian, Shenzhen, Guangdong 518129 (CN); MA, Junwen, Shenzhen, Guangdong 518129 (CN)
(74) Representative: Goddar, Heinz J.
(86) International application number: PCT/CN2023/114103
(87) International publication number: WO 2024/041491

(57) **Abstract**

A power supply method, a readable medium, and an electronic device are provided. In the method, after detecting that a power consumption device is connected, a power supply device first sets the power consumption device to a high resistance state, and attempts to supply power to the power consumption device, so as to determine a power supply current for the power supply device to supply power to the power consumption device. The power supply device supplies power to the power consumption device only when the power supply current is less than a preset current, and a power at which the power supply device supplies power to the power consumption device is determined based on a relationship between a power supply impedance and a preset impedance. This can prevent the power supply device from supplying power to the power consumption device when an exception occurs on a power supply path for the power consumption device, thereby improving power supply safety. In addition, in a process in which the power supply device supplies power to the power consumption device, a supply power may be adjusted, or power supplying to the power consumption device may be stopped based on a change of a temperature of a connection area between the power supply device and the power consumption device, to avoid a sharp rise in the temperature of the connection area due to long-term working, an external environment change, an excessively high supply power, or the like. In this way, user experience is improved.

## Description

This application claims priority to Chinese Patent Application No. 202211009046.0, filed with the China National Intellectual Property Administration on August 22, 2022 and entitled "POWER SUPPLY METHOD, READABLE MEDIUM, AND ELECTRONIC DEVICE", which is incorporated herein by reference in its entirety.

### TECHNICAL FIELD

This application relates to the field of electronic technologies, and in particular, to a power supply method, a readable medium, and an electronic device.

### BACKGROUND

To meet a user's requirement for using an electronic device in different application scenarios, more electronic devices can be used as a tablet computer, and can also be used as a notebook computer in combination with another device like a keyboard device. In this type of electronic device, when the tablet computer and the keyboard device are used separately, a battery disposed in the tablet computer or a power adapter connected to the tablet computer supplies power to the tablet computer. After the tablet computer is connected to the keyboard device through an electrical connector, for example, a pogo pin (pogo pin), at least one of the battery disposed in the tablet computer, a battery disposed in the keyboard device, the power adapter connected to the tablet computer, and a power adapter connected to the keyboard device may supply power to the tablet computer and the keyboard device.

However, because the electrical connector between the tablet computer and the keyboard device is usually detachably connected, when an electrical connection part is contaminated with foreign matter, in poor contact, or short-circuited, an exception is likely to occur on a power supply path between the tablet computer and the keyboard device. In this case, if the tablet computer supplies power to the keyboard device through the electrical connector, or the keyboard device supplies power to the keyboard device through the electrical connector, use safety and user experience for the electronic device may be affected.

### SUMMARY

In view of this, embodiments of this application provide a power supply method, a readable medium, and an electronic device.

According to a first aspect, an embodiment of this application provides a power supply method, applied to a first electronic device, where the first electronic device is electrically connected to a second electronic device through an electrical connector, and the method includes: When a power supply current for the first electronic device to supply power to the second electronic device meets a preset current condition, and a power supply impedance for the first electronic device to supply power to the second electronic device meets a preset impedance condition, the first electronic device supplies power to the second electronic device at a first power through the electrical connector; or when the power supply current for the first electronic device to supply power to the second electronic device meets the preset current condition, and the power supply impedance does not meet the preset impedance condition, the first electronic device supplies power to the second electronic device at a second power through the electrical connector, where the second power is less than the first power, where the preset current condition includes that the power supply current is less than a preset power supply current, and the preset impedance condition includes that the power supply impedance is less than a preset power supply impedance.

According to the method provided in embodiments of this application, the first electronic device supplies power to the second electronic device only when the power supply current meets the preset current condition. This can avoid affecting power consumption safety and user experience due to a short circuit of the electrical connector. In addition, the first electronic device may further supply power to the second electronic device at different supply powers based on whether the power supply impedance meets the preset impedance condition, to avoid a temperature rise caused by supplying power to the second electronic device at a high power when the power supply impedance is large. This improves power consumption safety and user experience.

In a possible implementation of the first aspect, the method further includes: When the power supply current for the first electronic device to supply power to the second electronic device does not meet the preset current condition, the first electronic device stops supplying power to the second electronic device.

In embodiments of this application, the first electronic device does not supply power to the second electronic device when the power supply current of the first electronic device does not meet the preset current condition. This can avoid affecting power consumption safety and user experience due to a short circuit of the electrical connector.

In a possible implementation of the first aspect, the method further includes: When a temperature of an area in which the electrical connector is located meets a first temperature condition, a power at which the first electronic device supplies power to the second electronic device is reduced; or when the temperature of the area in which the electrical connector is located meets a second temperature condition, the first electronic device stops supplying power to the second electronic device.

In embodiments of this application, the first electronic device may reduce the supply power or stop supplying power to the second electronic device when the temperature of the area in which the electrical connector is located is high, thereby improving power consumption safety and user experience.

In a possible implementation of the first aspect, the first temperature condition includes: the temperature of the area in which the electrical connector is located is greater than or equal to a first preset temperature, and the temperature of the area in which the electrical connector is located is less than a second preset temperature, where the first preset temperature is less than the second preset temperature; and the second temperature condition includes: the temperature of the area in which the electrical connector is located is greater than or equal to the second preset temperature.

In a possible implementation of the first aspect, the power supply current is a current flowing from the first electronic device to the electrical connector.

In a possible implementation of the first aspect, the power supply impedance is an impedance of at least a partial circuit that includes the electrical connector and that is in a circuit in which the first electronic device supplies power to the second electronic device.

In a possible implementation of the first aspect, the power supply impedance is determined based on a voltage between a first sampling point of the first electronic device and a second sampling point of the second electronic device in the circuit in which the first electronic device supplies power to the second electronic device, and the power supply current.

In a possible implementation of the first aspect, the first electronic device includes a temperature detection unit disposed in the area in which the electrical connector is located, and the temperature of the area in which the electrical connector is located is obtained by the temperature detection unit.

In a possible implementation of the first aspect, the first electronic device includes a first power supply module, and the second electronic device includes a second power supply module and a second power consumption module; the first power supply module includes a first charging unit, a first battery, and a first power interface, an input end of the first charging unit is electrically connected to the first power interface and one end of a first switch, a charging end of the first charging unit is electrically connected to the first battery, an output end of the first charging unit is electrically connected to one end of a second switch, and the other end of the first switch and the other end of the second switch are electrically connected to the electrical connector; the second power supply module includes a second charging unit, an input end of the second charging unit is electrically connected to one end of a third switch, and the other end of the third switch is electrically connected to the electrical connector; and that the first electronic device supplies power to the second electronic device at a first power through the electrical connector includes: when the first power interface is not connected to a power adapter, setting the first charging unit to be in a discharging mode, setting the second charging unit to be in a charging mode, setting a maximum power of the second charging unit to the first power, turning on the second switch and the third switch, and supplying power to the second electronic device by using the first battery as a power supply; or when the first power interface is connected to the power adapter, setting the first charging unit and the second charging unit to be in the charging mode, setting the maximum power of the second charging unit to the first power, turning on the first switch and the third switch, or turning on the second switch and the third switch, and supplying power to the second electronic device by using the power adapter as the power supply.

In a possible implementation of the first aspect, that the first electronic device supplies power to the second electronic device at a second power through the electrical connector includes: when the first power interface is not connected to the power adapter, setting the first charging unit to be in the discharging mode, setting the second charging unit to be in the charging mode, setting the maximum power of the second charging unit to the second power, turning on the second switch and the third switch, and supplying power to the second electronic device by using the first battery as the power supply; or when the first power interface is connected to the power adapter, setting the first charging unit and the second charging unit to be in the charging mode, setting the maximum power of the second charging unit to the second power, turning on the first switch and the third switch, or turning on the second switch and the third switch, and supplying power to the second electronic device by using the power adapter as the power supply.

In a possible implementation of the first aspect, the second power supply module further includes a second battery and a second power interface, an input end of the second charging unit is further electrically connected to the second power interface, and a charging end of the second charging unit is electrically connected to the second battery; and when the first power interface is connected to the power adapter and the second power interface is not connected to a power adapter, or neither the first power interface nor the second power interface is connected to a power adapter and a state of charge of the first battery is higher than a state of charge of the second battery, the first electronic device supplies power to the second electronic device at the first power or the second power through the electrical connector.

In a possible implementation of the first aspect, the electrical connector includes any one of the following electrical connectors: a pogo pin, a threaded connector, a bayonet connector, a latch connector, a push-pull connector, and an in-line connector.

In a possible implementation of the first aspect, the first electronic device is a keyboard device or a tablet computer, and the second electronic device is a tablet computer or a keyboard device.

According to a second aspect, an embodiment of this application provides a power supply method, applied to an electronic device, where the electronic device includes a first component and a second component, the first component is electrically connected to the second component through an electrical connector, and the method includes: When a power supply current for the first component to supply power to the second component meets a preset current condition, and a power supply impedance for the first component to supply power to the second component meets a preset impedance condition, the first component supplies power to the second component at a first power through the electrical connector; or when the power supply current for the first component to supply power to the second component meets the preset current condition, and the power supply impedance does not meet the preset impedance condition, the first component supplies power to the second component at a second power through the electrical connector, where the second power is less than the first power, where the preset current condition includes that the power supply current is less than a preset power supply current, and the preset impedance condition includes that the power supply impedance is less than a preset power supply impedance.

According to the method provided in embodiments of this application, the first component supplies power to the second component only when the power supply current meets the preset current condition. This can avoid affecting power consumption safety and user experience due to a short circuit of the electrical connector. In addition, the first component may further supply power to the second component at different supply powers based on whether the power supply impedance meets the preset impedance condition, to avoid a temperature rise caused by supplying power to the second component at a high power when the power supply impedance is large. This improves power consumption safety and user experience of an electronic device.

In a possible implementation of the second aspect, the method further includes: When a temperature of an area in which the electrical connector is located meets a first temperature condition, a power at which the first component supplies power to the second component is reduced; or when the temperature of the area in which the electrical connector is located meets a second temperature condition, the first component stops supplying power to the second component.

In embodiments of this application, the first component may reduce the supply power or stop supplying power to the second component when the temperature of the area in which the electrical connector is located is high, thereby improving power consumption safety and user experience of an electronic device.

In a possible implementation of the second aspect, the first temperature condition includes: the temperature of the area in which the electrical connector is located is greater than or equal to a first preset temperature, and the temperature of the area in which the electrical connector is located is less than a second preset temperature, where the first preset temperature is less than the second preset temperature; and the second temperature condition includes: the temperature of the area in which the electrical connector is located is greater than or equal to the second preset temperature.

According to a third aspect, an embodiment of this application provides a readable medium, where the readable medium stores instructions, and when the instructions are executed on an electronic device, the electronic device is enabled to implement any one of the power supply methods according to the first aspect, the second aspect, the possible implementations of the first aspect, and the possible implementations of the second aspect.

According to a fourth aspect, an embodiment of this application provides an electronic device, where the electronic device includes: a memory, configured to store instructions executed by one or more processors of the electronic device; and a processor, being one of the processors of the electronic device, configured to execute the instructions stored in the memory to implement any one of the power supply methods according to the first aspect, the second aspect, the possible implementations of the first aspect, and the possible implementations of the second aspect.

According to a fifth aspect, an embodiment of this application provides a computer program product, where when the computer program product runs on an electronic device, the electronic device is enabled to implement any one of the power supply methods according to the first aspect, the second aspect, the possible implementations of the first aspect, and the possible implementations of the second aspect.

### BRIEF DESCRIPTION OF DRAWINGS

FIG. 1A is a diagram of a structure of an electronic device 1 in a disconnected state according to some embodiments of this application;
FIG. 1B is a diagram of a structure of an electronic device 1 in a connected state according to some embodiments of this application;
FIG. 1C is a diagram of an area A in FIG. 1B in a case in which a connection part 31 and a connection part 30 are pogo pins according to some embodiments of this application;
FIG. 2A is a diagram of a scenario in which a tablet computer 10 supplies power to a keyboard device 20 according to some embodiments of this application;
FIG. 2B is a diagram of a power supply module of an electronic device 1 according to some embodiments of this application;
FIG. 3A is a diagram of a power supply path in a case in which a battery 11 is used as a power supply to supply power to a tablet computer 10 and a keyboard device 20 according to some embodiments of this application;
FIG. 3B is a diagram of a power supply path in a case in which a battery 21 is used as a power supply to supply power to a tablet computer 10 and a keyboard device 20 according to some embodiments of this application;
FIG. 3C is a diagram of a power supply path in a case in which a power adapter connected to a power interface 15 is used as a power supply to supply power to a tablet computer 10 and a keyboard device 20 according to some embodiments of this application;
FIG. 3D is a diagram of a power supply path in a case in which a power adapter connected to a power interface 25 is used as a power supply to supply power to a tablet computer 10 and a keyboard device 20 according to some embodiments of this application;
FIG. 4 is a diagram of a structure of a power supply module of an electronic device 1 in which only two voltage and current detection units are used according to some embodiments of this application;
FIG. 5A is a diagram of a structure of a power supply module of another electronic device 1 according to some embodiments of this application;
FIG. 5B is a diagram of a structure of a power supply module of still another electronic device 1 according to some embodiments of this application;
FIG. 5C is a diagram of a structure of a power supply module of yet another electronic device 1 according to some embodiments of this application;

FIG. 6A and FIG. 6B are a schematic flowchart of a power supply method according to some embodiments of this application;
FIG. 7 is a schematic flowchart of a power supply method according to some embodiments of this application; and
FIG. 8 is a diagram of a hardware structure of a two-in-one computer 1 according to some embodiments of this application.

### DESCRIPTION OF EMBODIMENTS

Illustrative embodiments of this application include but are not limited to a power supply method, a readable medium, and an electronic device.

It may be understood that the power supply method provided in embodiments of this application is applicable to any scenario in which a power supply device and a power consumption device are connected through an electrical connector. For ease of description, the following describes the technical solutions of this application with reference to the accompanying drawings by using an electronic device 1 in which a power supply module is disposed on each of the tablet computer and the keyboard device, and the tablet computer and the keyboard device can supply power to each other after being electrically connected through an electrical connector as an example.

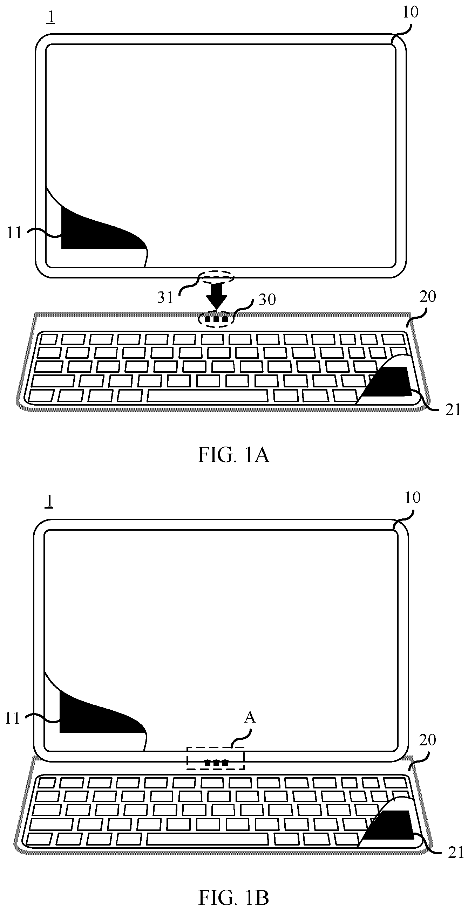

FIG. 1A is a diagram of a structure of the electronic device 1 in a disconnected state according to some embodiments of this application. FIG. 1B is a diagram of a structure of the electronic device 1 in a connected state according to some embodiments of this application.

As shown in FIG. 1A, the electronic device 1 includes a tablet computer 10 and a keyboard device 20. A battery 11 is disposed in the tablet computer 10, and a battery 21 is disposed in the keyboard device 20. An electrical connection part 31 is disposed on the tablet computer 10, and is configured to electrically connect to an electrical connection part 30 on the keyboard device 20.

When the tablet computer 10 is not connected to the keyboard device 20, a power supply module PS-1 (not shown) disposed in the tablet computer 10 supplies power to the tablet computer 10 through the battery 11, or a power adapter connected to the tablet computer 10 supplies power to the tablet computer 10, and a power supply module PS-2 (not shown) disposed in the keyboard device 20 supplies power to the keyboard device 20 through the battery 21, or a power adapter connected to the keyboard device 20 supplies power to the keyboard device 20.

Refer to FIG. 1B. After an electrical connection is established between the tablet computer 10 and the keyboard device 20 through the electrical connection part 30 and the electrical connection part 31, the electronic device 1 may be used as a notebook computer. In this case, the power supply module PS-1 may supply power to the electronic device 1 through the battery 11, or the power adapter connected to the tablet computer 10 may supply power to the electronic device 1, or the power supply module PS-2 may supply power to the electronic device 1 through the battery 21, or the power adapter connected to the keyboard device 20 may supply power to the electronic device 1, or the power supply module PS-1 and the power supply module PS-2 may jointly supply power to the electronic device 1.

It may be understood that an electrical connector corresponding to the connection part 31 and the connection part 30 may be any electrical connector, including but not limited to a pogo pin, a threaded connector, a bayonet connector, a latch connector, a push-pull connector, an in-line connector, and the like. For ease of description, the following uses an example in which the electrical connector corresponding to the connection part 31 and the connection part 30 is the pogo pin for description.

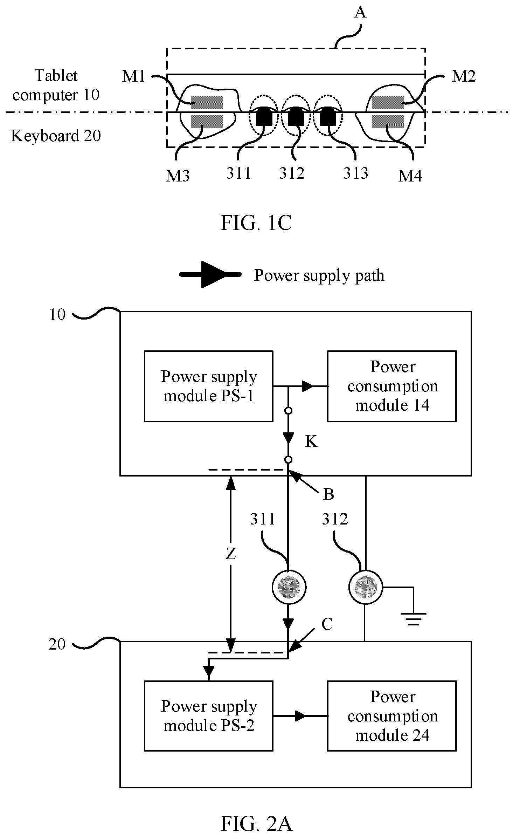

For example, FIG. 1C is a diagram of an area A in FIG. 1B in a case in which the electrical connector corresponding to the connection part 31 and the connection part 30 is the pogo pin.

Refer to FIG. 1C. The tablet computer 10 and the keyboard device 20 are electrically connected through three pogo pins (a pogo pin 311, a pogo pin 312, and a pogo pin 313), where the pogo pin 311 is a power supply, the pogo pin 312 is a ground, and the pogo pin 313 is a communication signal. In addition, a magnet M1 and a magnet M2 are disposed in the tablet computer 10, and a magnet M3 and a magnet M4 are respectively disposed in areas that are in the keyboard device 20 and that are opposite to the magnet M1 and the magnet M2, to ensure connection pressure of the pogo pin 311, the pogo pin 312, and the pogo pin 313 by using magnetic forces among the magnet M1, the magnet M2, the magnet M3, and the magnet M4. In this way, stability of an electrical connection between the tablet computer 10 and the keyboard device 20 is improved.

It may be understood that in the foregoing, that the pogo pin 311 is used as the power supply, the pogo pin 312 is used as the ground, and the pogo pin 313 is used as the communication signal is merely an example. In some other embodiments, an electrical signal connected to each pogo pin may be another signal, or more or fewer pogo pins may be used. This is not limited herein.

The electrical connector, for example, the pogo pin 311, the pogo pin 312, and the pogo pin 313, between the tablet computer 10 and the keyboard device 20 is detachably connected. Therefore, when the electrical connection parts are contaminated with foreign matter, in poor contact, or short-circuited, for example, when the pogo pin 311 and the pogo pin 312 are short-circuited, a temperature of an area in which the pogo pin 311, the pogo pin 312, and the pogo pin 313 are located is likely to increase if the tablet computer 10 and the keyboard device 20 still supply power to each other through the electrical connector. This leads to component aging or even damage to the power supply module PS-1, the power supply module PS-2, and the pogo pins, affecting use safety and user experience of the electronic device 1.

Embodiments of this application provide a power supply management method, to avoid a case in which use safety and user experience of the electronic device 1 are affected as an exception on a power supply path between the tablet computer 10 and the keyboard device 20 is caused because the electrical connection parts of the tablet computer 10 and the keyboard device 20 are contaminated with foreign matter, in poor contact, short-circuited, or the like. The electronic device 1 may determine a status of the power supply path between the tablet computer 10 and the keyboard device 20 by obtaining a power supply current and a power supply impedance between the tablet computer 10 and the keyboard device 20, and use different supply powers based on the status of the power supply path. In a period in which power is supplied between the tablet computer 10 and the keyboard device 20 at the determined supply power, the electronic device 1 may further detect a temperature of an area (referred to as a connection area below) in which the electrical connector of the tablet computer 10 and the keyboard device 20 is located, to adjust, based on the detected temperature, the supply power at which power is supplied between the tablet computer 10 and the keyboard device 20.

Specifically, after detecting that the tablet computer 10 is electrically connected to the keyboard device 20, the electronic device 1 (the tablet computer or the keyboard device) may determine a primary power supply module, and set a charging unit in a secondary power supply module to a high resistance state. The primary power supply module attempts to supply power to a primary power consumption device and a secondary power consumption device at a lower power, to detect a power supply current I for the primary power supply module to supply power to the secondary power consumption device. If the power supply current I is less than a preset current I₀, it is determined that the primary power supply module may supply power to the secondary power consumption device; or if the power supply current I is not less than the preset current I₀, it indicates that some circuits of the power supply path may be short-circuited. In this case, the primary power supply module stops supplying power to the secondary power consumption device. For example, the tablet computer 10 includes a power supply module PS-1, a power consumption module 14, and a switch K. The keyboard device 20 includes a power supply module PS-2 and a power consumption module 24, and the power supply module PS-2 and the power consumption module 24, where the power supply module PS-1 may supply power to the power consumption module 24 through the switch K, the pogo pin 311, and the power supply module PS-2, and the tablet computer 10 and the keyboard device 20 share a same ground through the pogo pin 312. When the power supply module PS-1 is used as a primary power supply module to supply power to the power consumption module 14 and the power consumption module 24, the tablet computer 10 may first set the power supply module PS-2 to a high resistance state, to attempt to supply power by turning on the switch. In this case, if a current (namely, the power supply current I) flowing from the switch K to the pogo pin 311 is greater than the preset current I₀, it indicates that the pogo pin 311 and the pogo pin 312 may be short-circuited. In this case, the switch K is turned off, to stop supplying power to the keyboard device 20; or if the current flowing from the switch K to the pogo pin 311 is not greater than the preset current I₀, it indicates that the power supply module PS-1 may supply power to the keyboard device 20.

If it is determined that the power supply current I is less than the preset current I₀, a power supply impedance Z of a power supply path from the primary power supply module to the secondary power consumption device is determined. If the power supply impedance Z is less than a preset power supply impedance Z₀, it indicates that there is no foreign matter in the power supply path, and power supplying at a first power does not cause an excessively high temperature of the connection area. In this case, the primary power supply module supplies power to the secondary power consumption device at the first power. If the power supply impedance Z is greater than or equal to the preset power supply impedance Z₀, it indicates that there may be foreign matter in the power supply path, and power supplying at the first power may cause an excessively high temperature of the connection area. In this case, the primary power supply module supplies power to the secondary power consumption device at a second power (where the second power is less than the first power). Refer to FIG. 2A. If the current flowing from the switch K to the pogo pin 311 is smaller than the preset current I₀, the power supply resistance Z is determined, for example, an impedance between a point B in the tablet computer 10 and a point C in the keyboard device 20 in a connection path between the power supply module PS-1 and the power supply module PS-2. If the power supply impedance Z is less than the preset power supply impedance Z₀, the tablet computer 10 supplies power to the keyboard device 20 at the first power; or if the power supply impedance Z is greater than or equal to the preset power supply impedance Z₀, the tablet computer 10 supplies power to the keyboard device 20 at the first power.

It may be understood that, in some embodiments, the first power may be a power that is used within preset duration when the power supply impedance Z is less than the preset power supply impedance Z₀ and that does not cause a rapid increase in the temperature of the connection area. The first power may be an empirical value or an experimental value, or may be a maximum power that can be provided by the primary power supply module, or may be a peak power consumed by the secondary power consumption device. For example, when a power of a power adapter connected to the primary power consumption device is 65 W, the first power may be 65 W. For another example, in FIG. 2A, assuming that a peak power consumed by the keyboard device 20 is 30 W, the first power may be 30 W.

It may be understood that, in some embodiments, the second power may be a power that is used within preset duration when the power supply impedance Z is greater than or equal to the preset power supply impedance Z₀ and that does not cause a rapid increase in the temperature of the connection area. The second power may be an empirical value or an experimental value less than the first power, or may be a value dynamically adjusted based on the power supply impedance Z. For example, when a value of the first power is 65 W, a value of the second power may be 20 W. For another example, when the power supply impedance Z has different values, a relationship in which a temperature T' of the connection area between the tablet computer 10 and the keyboard device 20 varies with the second power within preset duration may be obtained through experiment, to further determine values of the second power, at the different values of the power supply impedance Z, when the temperature T' is less than a preset value. In this way, different values of the second power may be used based on the different values of the power supply impedance Z.

In addition, when supplying power to the secondary power consumption device, the primary power supply module detects a temperature T of the connection area, for example, a temperature of an area in which the pogo pin 311 and the pogo pin 312 in FIG. 2A are located. If the temperature T is less than a first temperature threshold T1 (T<T1), it indicates that the temperature of the connection area is normal, and a current supply power is maintained; if the temperature T is greater than or equal to a second temperature threshold T2 (T≥T2), it indicates that the temperature of a power supply area is excessively high, which may affect user experience or power consumption safety. In this case, the primary power supply module stops supplying power to the secondary power consumption device; or if the temperature T is greater than or equal to the first temperature threshold T1 and less than the second temperature threshold T2 (T1≤T<T2), it indicates that the temperature of the power supply area is high, but user experience or power consumption safety is not affected. In this case, the primary power supply module may reduce the supply power to prevent the temperature of the power supply area from continuously rising.

In this way, the primary power supply module supplies power to the secondary power consumption device only when the power supply current I for supplying power to the secondary power consumption device is less than the preset current I₀, where a supply power is determined based on a relationship between the power supply impedance Z and the preset impedance Z₀. This can avoid a case in which power consumption safety is affected as power is still supplied to the secondary power consumption device when the pogo pin 311 and the pogo pin 312 are short-circuited, and a case in which power consumption safety and user experience are affected as an impedance between the tablet computer 10 and the keyboard device 20 increases, and the temperature of the connection area sharply rises due to supplying power at a high power. In addition, in a process in which the primary power supply module supplies power to the secondary power consumption device, the supply power may be adjusted, or power supplying to the power consumption device may be stopped based on a change of the temperature of the connection area, to avoid a sharp rise in the temperature of the connection area due to long-term working, an external environment change, an excessively high supply power, or the like. In other words, according to the power supply method provided in embodiments of this application, the temperature of the connection area between the tablet computer 10 and the keyboard device 20 can be effectively reduced, so that power consumption safety of the electronic device 1 can be improved, and user experience can be improved.

It may be understood that, in some embodiments, in the high resistance state of the charging unit, the charging unit is set to a device state with infinite resistance by disconnecting some circuits, components, or the like. An electrical connection between the charging unit in the high resistance state and a next-level circuit is equivalent to a disconnected state.

It may be understood that the primary power supply module is a power supply module that supplies power to the tablet computer 10 and the keyboard device 20. For example, when the battery 11 or the power adapter connected to the tablet computer 10 supplies power to the tablet computer 10 and the keyboard device 20, the power supply module PS-1 disposed in the tablet computer 10 is the primary power supply module, and therefore the power supply module PS-2 disposed in the keyboard device 20 is the secondary power supply module. For another example, when the battery 21 or the power adapter connected to the keyboard device 20 supplies power to the tablet computer 10 and the keyboard device 20, the power supply module PS-2 disposed in the keyboard device 20 is the primary power supply module, and therefore the power supply module PS-1 disposed in the tablet computer 10 is the secondary power supply module.

It may be understood that the power supply current I may be a current provided by the primary power supply module to the secondary power consumption device, for example, a current flowing from the primary power supply device to the electrical connector. In some embodiments, a current detection unit may be disposed in a circuit in which the primary power supply module supplies power to the secondary power consumption device, to obtain the power supply current I.

It may be understood that the power supply impedance Z is an impedance of at least a partial circuit that includes the electrical connector (for example, including the foregoing pogo pin) and that is in the power supply circuit in which the primary power supply module supplies power to the secondary power consumption device. In some embodiments, voltages of two sampling points in the power supply circuit in which the primary power supply module supplies power to the secondary power consumption device may be detected, and the power supply impedance Z may be determined based on a voltage difference between the two sampling points and the power supply current I. The two sampling points are respectively disposed in the tablet computer 10 and the keyboard device 20, and the electrical connector is disposed in a circuit between the two sampling points.

It may be understood that the primary power consumption device is a device in which the primary power supply module is located. For example, when the primary power supply module is the power supply module PS-1, the tablet computer 10 is the primary power consumption device, and correspondingly, the keyboard device 20 is the secondary power consumption device. For another example, when the primary power supply module is the power supply module PS-2, the keyboard device 20 is the primary power consumption device, and correspondingly, the tablet computer 10 is the secondary power consumption device.

It may be understood that, in some embodiments, when neither the tablet computer 10 nor the keyboard device 20 is connected to a power adapter, the primary power supply module may be a power supply module corresponding to a battery with a larger state of charge; when one of the tablet computer 10 and the keyboard device 20 is connected to the power adapter, the primary power supply module may be a power supply module connected to the power adapter; or when each of the tablet computer 10 and the keyboard device 20 is connected to the power adapter, the tablet computer 10 and the keyboard device 20 may not supply power to each other, but separately supply power to corresponding devices through the power adapters connected to the tablet computer 10 and the keyboard device 20. Selection of the primary power supply module is not specifically limited in embodiments of this application.

It may be understood that, in some embodiments, because the primary power supply module supplies power to the primary power consumption device without using the electrical connector (for example, the pogo pin 311 and the pogo pin 312) that is electrically connected to the tablet computer 10 and the keyboard device 20, power supplying by the primary power supply module to the primary power consumption device is not affected by the power supply impedance Z, the power supply current I, and the temperature T.

It may be understood that, in some embodiments, in a process in which the primary power supply module supplies power to the secondary power consumption device, a power supply in the secondary power supply module outputs a power to the secondary power consumption device only when the primary power supply module cannot provide a sufficient power.

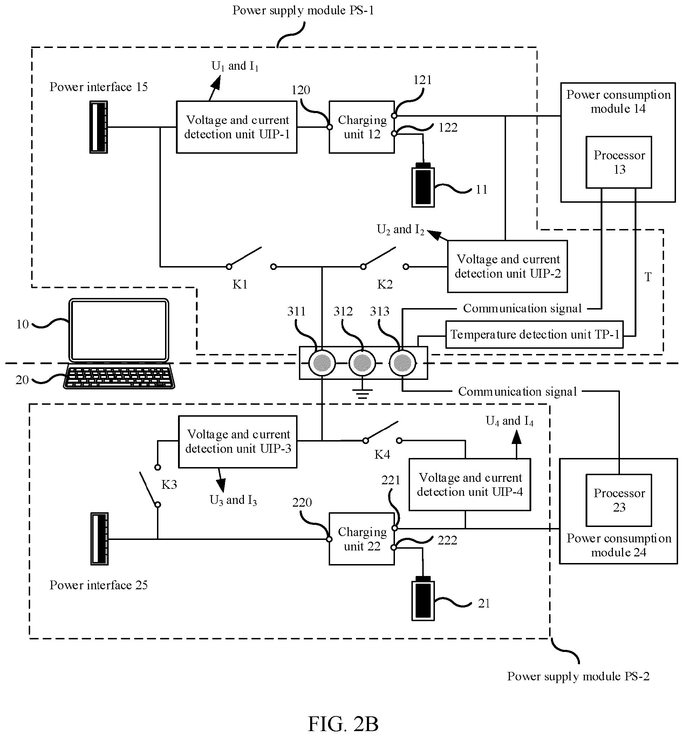

Specifically, FIG. 2B is a diagram of a power supply module of the electronic device 1 according to some embodiments of this application.

As shown in FIG. 2B, the electronic device 1 includes the power supply module PS-1 disposed in the tablet computer 10, the power supply module PS-2 disposed in the keyboard device 20, the power consumption module 14 disposed in the tablet computer 10, and the power consumption module 24 disposed in the keyboard device 20.

The power supply module PS-1 includes a power interface 15, a voltage and current detection unit UIP-1, a voltage and current detection unit UIP-2, a charging unit 12, a battery 11, a switch K1, a switch K2, and a temperature detection unit TP1.

One end of the power interface 15 is used to connect to a power adapter, and the other end is electrically connected to one end of the voltage and current detection unit UIP-1 and one end of the switch K1.

The other end of the voltage and current detection unit UIP-1 is electrically connected to an input end of the charging unit 12, and the voltage and current detection unit UIP-1 is configured to detect a voltage U₁ at the input end 120 of the charging unit 12 and a current I₁ flowing through the voltage and current detection unit UIP-1.

An output end 121 of the charging unit 12 is electrically connected to the power consumption module 14 and one end of the voltage and current detection unit UIP-2, and a battery end 122 is used to connect to the battery 11. The charging unit 12 includes two working modes: a charging mode, in which the input end 120 is used as a power supply to charge the battery 11 and supply power to the outside through the output end 121; and a discharging mode, in which the battery end 122 is used as a power supply to supply power to the outside through the output end 121.

In some embodiments, the charging unit 12 may further include a control module configured to control an output power, an impedance, and the like of the charging unit 12, for example, a charging chip. For example, in some embodiments, the control module may include a current limiting register (not shown) configured to manage an input current of the charging unit 12. A processor 13 may limit, by writing different values to the current limiting register, a maximum power provided by the charging unit 12. The control module may further include a switch configured to manage connection and disconnection between the charging unit 12 and a subsequent circuit (for example, the battery 11 or the power consumption module 14). The processor 13 may turn off the switch to set the charging unit 12 to the high resistance state.

The other end of the voltage and current detection unit UIP-2 is electrically connected to one end of the switch K2, and the voltage and current detection unit UIP-2 is configured to detect a voltage U₂ at the output end 121 of the charging unit 12 and a current I₂ flowing through the voltage and current detection unit UIP-2.

The other end of the switch K1 is connected to the other end of the switch K2 and the pogo pin 311.

The temperature detection unit TP-1 is configured to: detect a temperature T of the area in which the pogo pin 311, the pogo pin 312, and the pogo pin 313 are located, and send the detected temperature T to the processor 13.

It may be understood that, in some other embodiments, the temperature detection unit TP-1 may alternatively be disposed in the keyboard device 20, or a plurality of temperature detection units TP-1 may be disposed. This is not limited herein.

The power consumption module 14 includes various power consumption components in the tablet computer 10, such as a processor, a memory, a controller, and an input/output device. Specifically, the power consumption module 14 includes the processor 13 that may be configured to: obtain currents and voltages detected by the voltage and current detection unit UIP-1, the voltage and current detection unit UIP-2, a voltage and current detection unit UIP-3, a voltage and current detection unit UIP-4, and the temperature detected by the temperature detection unit TP-1, and control on and off of switches K1 to K4 and adjust a supply power between the tablet computer 10 and the keyboard device 20 based on the obtained voltages, currents, and temperature.

The power supply module PS-2 includes a power interface 25, the voltage and current detection unit UIP-3, the voltage and current detection unit UIP-4, a charging unit 22, a battery 21, the switch K3, and the switch K4.

One end of the power interface 25 is configured to be connected to a power adapter, and the other end is electrically connected to an input end 220 of the charging unit 22 and one end of the switch K3.

An output end 221 of the charging unit 22 is electrically connected to the power consumption module 24 and one end of the voltage and current detection unit UIP-4, and a battery end 222 is used to connect to the battery 21. The charging unit 22 includes two working modes: a charging mode, in which the input end 220 is used as a power supply to charge the battery 21 and supply power to the outside through the output end 221; and a discharging mode, in which the battery end 222 is used as a power supply to supply power to the outside through the output end 221.

In some embodiments, the charging unit 22 may further include a control module configured to control an output power, an impedance, and the like of the charging unit 22, for example, a charging chip. For example, in some embodiments, the control module may include a current limiting register (not shown) configured to manage an input current of the charging unit 22. The processor 13 or a processor 23 may limit, by writing different values to the current limiting register, a maximum power provided by the charging unit 22. The control module may further include a switch configured to manage connection and disconnection between the charging unit 22 and a subsequent circuit (for example, the battery 21 or the power consumption module 24). The processor 23 may turn off the switch to set the charging unit 22 to the high resistance state.

The other end of the switch K3 is connected to one end of the voltage and current detection unit UIP-3.

The other end of the voltage and current detection unit UIP-3 is electrically connected to one end of the switch K4 and the pogo pin 311, and the voltage and current detection unit UIP-3 is configured to detect a voltage U₃ at the input end 220 of the charging unit 12 and a current I₃ flowing through the voltage and current detection unit UIP-3.

The other end of the voltage and current detection unit UIP-4 is electrically connected to the other end of the switch K4, and the voltage and current detection unit UIP-4 is configured to detect a voltage U₄ at the output end 221 of the charging unit 22 and a current I₄ flowing through the voltage and current detection unit UIP-4.

The power consumption module 24 includes various power consumption components in the keyboard device 20, such as a processor, a memory, a controller, and an input/output device. Specifically, the power consumption module 24 includes the processor 23 that may be configured to: obtain the currents and voltages detected by the voltage and current detection unit UIP-1, the voltage and current detection unit UIP-2, the voltage and current detection unit UIP-3, the voltage and current detection unit UIP-4, and the temperature detected by the temperature detection unit TP-1, and control on and off of the switches K1 to K4 and adjust the supply power between the tablet computer 10 and the keyboard device 20 based on the obtained voltages, currents, and temperature.

In addition, the processor 13 and the processor 23 may be electrically connected to the pogo pin 313 through at least one type of port, for example, a general purpose input/output port (general-purpose input/output, GPIO), to implement a communication connection between the processor 13 and the processor 23, for example, sending voltages and currents detected by the voltage and current detection units, sending instructions for controlling switches, and sending instructions for adjusting working modes and current upper limits of charging units.

It may be understood that ground signals of both the tablet computer 10 and the keyboard device 20 are electrically connected to the pogo pin 312, so that the tablet computer 10 and the keyboard device 20 may share a same ground.

With reference to the power supply module of the electronic device 1 shown in FIG. 2B, the following describes technical solutions for supplying power to the tablet computer 10 and the keyboard 20 in different scenarios.

First, a technical solution in which the power supply module PS-1 is used as the primary power supply module and the battery 11 is used as the power supply is described.

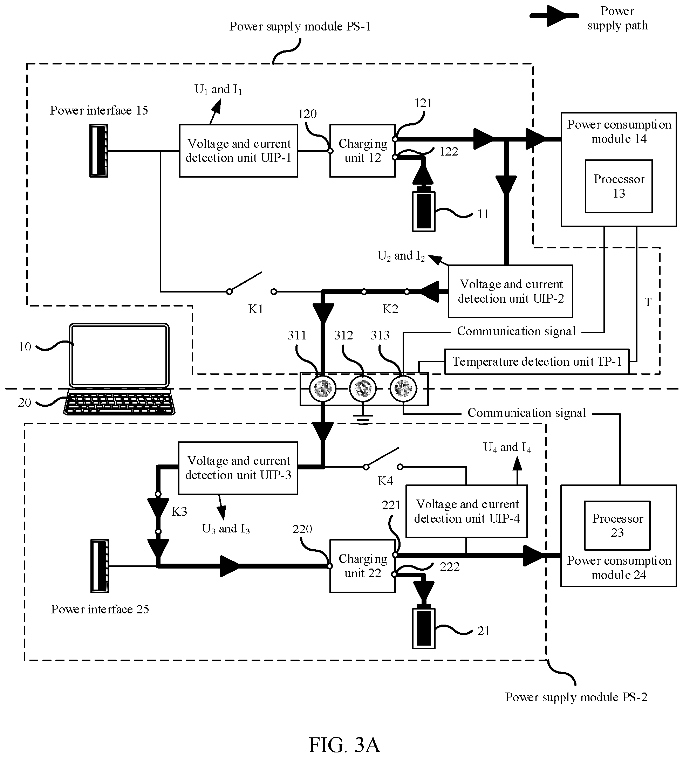

FIG. 3A is a diagram of a power supply path in a case in which the battery 11 is used as the power supply to supply power to the tablet computer 10 and the keyboard device 20 according to some embodiments of this application.

Refer to FIG. 3A. In some embodiments, the electronic device 1 may set the charging unit 12 to be in the discharging mode, set the charging unit 22 to be in the charging mode, turn on the switch K2 and the switch K3, and turn off the switch K1 and the switch K4, to supply power to the tablet computer 10 and the keyboard device 20 through the power supply module PS-1 by using the battery 11 as the power supply. The charging unit 12 uses the battery 11 as the power supply to supply power to the power consumption module 14 through the output port 121, and supply power to the power consumption module 24 through the voltage and current detection unit UIP-2, the switch K2, the pogo pin 311, the voltage and current detection unit UIP-3, the switch K3, and the charging unit 22.

After determining that the battery 11 is used as the power supply to supply power to the tablet computer 10 and the keyboard device 20 through the power supply module PS-1, the electronic device 1 may set the charging unit 22 to the high resistance state, to determine a power supply current I, and compare the power supply current I with the preset current I₀. If I>I₀, it indicates that an exception occurs on the power supply path. In this case, the switch K2 and the switch K3 are turned off, to stop supplying power to the keyboard device 20. Alternatively, if I≤I₀, it indicates that no exception occurs on the power supply path. In this case, power may be supplied to the keyboard device 20. Then, the electronic device 1 may determine an impedance Z of the power supply path, and compare the power supply impedance Z with the preset impedance Z₀. If Z<Z₀, power is supplied to the keyboard device 20 at the first power; or if Z≥Z₀, power is supplied to the keyboard device 20 at the second power. In addition, in a process of supplying power to the keyboard device 20, a temperature T of the connection area between the tablet computer 10 and the keyboard device 20 may be further detected through the temperature detection unit TP-1, and the temperature T is compared with a first preset temperature T1 and a second preset temperature T2 (T2>T1). If T<T1, it indicates that the temperature of the connection area is normal, and a current supply power is maintained; if T≥T2, it indicates that the temperature of the connection area is excessively high, and power supplying to the keyboard device 20 is stopped; or if T≤T1<T2, it indicates that the temperature of the connection area is high, but power consumption safety is not affected, and the current supply power is reduced.

It may be understood that, for the power supply path shown in FIG. 3A, the power supply current I may be the current I₂ detected by the voltage and current detection unit UIP-2. Therefore, when the pogo pin 311 and the pogo pin 312 are short-circuited, the current I₂ is far higher than the preset current I₀. It may be understood that, in some other embodiments, the power supply current I may alternatively be represented by another current value, for example, the current I₃ detected by the voltage and current detection unit UIP-3. This is not limited herein.

It may be understood that, for the power supply path shown in FIG. 3A, the power supply impedance Z may be represented as (U₂-U₃)/I₂ or (U₂-U₃)/I₃, where U₂ and I₂ are respectively the voltage and the current detected by the voltage and current detection unit UIP-2, and U₃ and I₃ are respectively the voltage and the current detected by the voltage and current detection unit UIP-3.

It may be understood that, in some other embodiments, the power supply impedance Z may alternatively be an impedance of at least a partial circuit that includes the pogo pin 311 and that is in the power supply path in which the charging unit 12 supplies power to the charging unit 22. For example, the impedance may be an impedance between any first sampling point between the output end 121 and the pogo pin 311 and any second sampling point between the pogo pin 311 and the input end 220 in the power supply path shown in FIG. 3A.

Second, a technical solution in which the power supply module PS-2 is used as the primary power supply module and the battery 21 is used as the power supply is described.

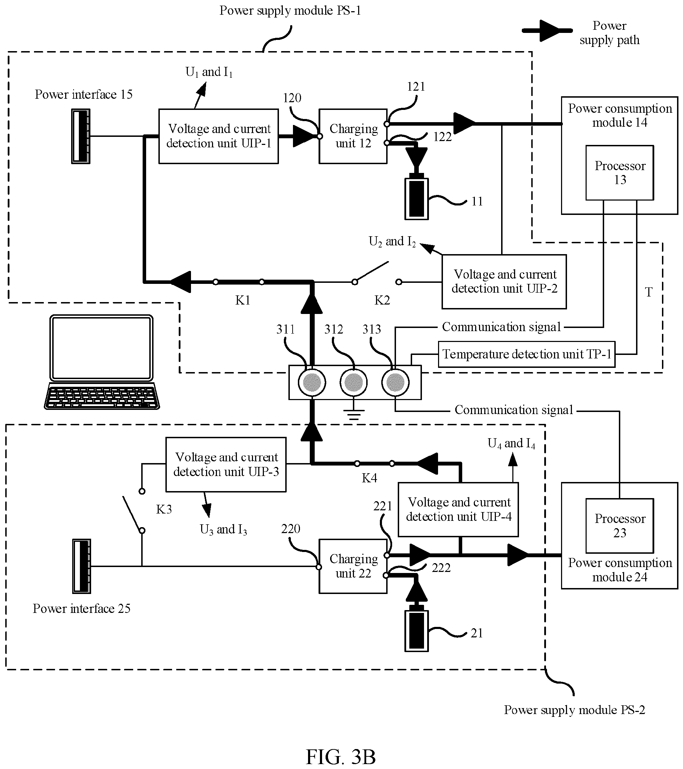

FIG. 3B is a diagram of a power supply path in a case in which the battery 21 is used as the power supply to supply power to the tablet computer 10 and the keyboard device 20 according to some embodiments of this application.

Refer to FIG. 3B. In some embodiments, the electronic device 1 may alternatively set the charging unit 22 to be in the discharging mode, set the charging unit 12 to be in the charging mode, turn on the switch K1 and the switch K4, and turn off the switch K2 and the switch K3, to supply power to the tablet computer 10 and the keyboard device 20 through the power supply module PS-2 by using the battery 21 as the power supply. The charging unit 22 uses the battery 21 as the power supply to supply power to the power consumption module 24 through the output port 221, and supply power to the power consumption module 14 through the voltage and current detection unit UIP-4, the switch K4, the pogo pin 311, the switch K1, the voltage and current detection unit UIP-1, and the charging unit 12.

After determining that the battery 21 is used as the power supply to supply power to the tablet computer 10 and the keyboard device 20 through the power supply module PS-2, the electronic device 1 may set the charging unit 12 to the high resistance state to determine a power supply current I, and compare the power supply current I with the preset current I₀. If I>I₀, it indicates that an exception occurs on the power supply path. In this case, the switch K1 and the switch K4 are turned off, to stop supplying power to the tablet computer 10. Alternatively, if I≤I₀, it indicates that no exception occurs on the power supply path. In this case, power may be supplied to the tablet computer 10. Then, the electronic device 1 may determine an impedance Z of the power supply path, and compare the power supply impedance Z with the preset impedance Z₀. If Z<Z₀,power is supplied to the tablet computer 10 at the first power; or if Z≥Z₀, power is supplied to the tablet computer 10 at the second power. In addition, in a process of supplying power to the tablet computer 10, a temperature T of the connection area between the tablet computer 10 and the keyboard device 20 may be further detected through the temperature detection unit TP-1, and the temperature T is compared with a first preset temperature T1 and a second preset temperature T2 (T2>T1). If T<T1, it indicates that the temperature of the connection area is normal, and a current supply power is maintained; if T≥T2, it indicates that the temperature of the connection area is excessively high, and power supplying to the tablet computer 10 is stopped; or if T≤T1<T2, it indicates that the temperature of the connection area is high, but power consumption safety is not affected, and the current supply power is reduced.

It may be understood that, for the power supply path shown in FIG. 3B, the power supply current I may be the current I₄ detected by the voltage and current detection unit UIP-4. Therefore, when the pogo pin 311 and the pogo pin 312 are short-circuited, the current I₄ is far higher than the preset current I₀. It may be understood that, in some other embodiments, the power supply current I may alternatively be represented by another current value, for example, the current I₁ detected by the voltage and current detection unit UIP-1. This is not limited herein.

It may be understood that, for the power supply path shown in FIG. 3B, the power supply impedance Z may be represented as (U₄-U₁)/I₄ or (U₄-U₁)/I₁, where U₄ and I₄ are respectively the voltage and the current detected by the voltage and current detection unit UIP-4, and U₁ and I₁ are respectively the voltage and the current detected by the voltage and current detection unit UIP-1.

Then, a technical solution in which the power supply module PS-1 is used as the primary power supply module and a power adapter connected to the power interface 15 is used as the power supply is described.

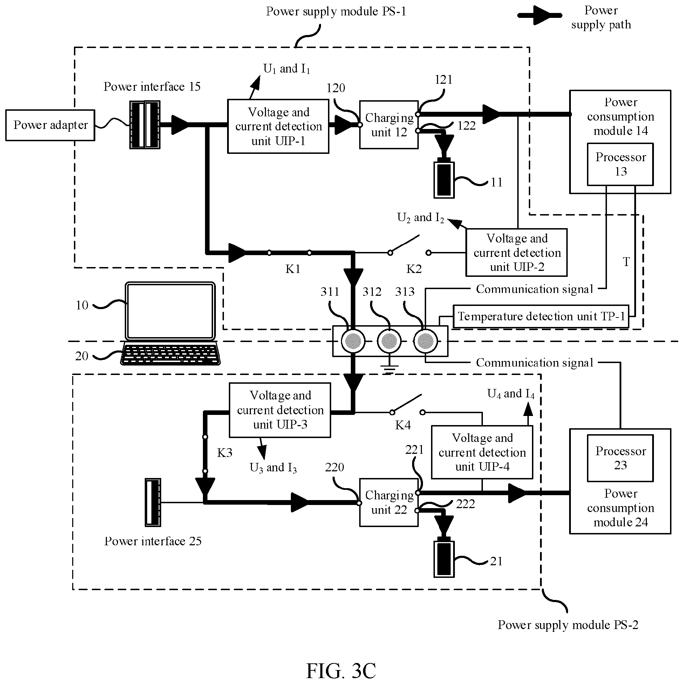

FIG. 3C is a diagram of a power supply path in a case in which the power adapter connected to the power interface 15 is used as the power supply to supply power to the tablet computer 10 and the keyboard device 20 according to some embodiments of this application.

Refer to FIG. 3C. In some embodiments, the electronic device 1 may alternatively set the charging unit 12 and the charging unit 22 to be in the charging mode, turn on the switch K1 and the switch K3, and turn off the switch K2 and the switch K4, to supply power to the tablet computer 10 and the keyboard device 20 by using the power adapter connected to the power interface 15 as the power supply. The power adapter connected to the power interface 15 supplies power to the power consumption module 14 through the voltage and current detection unit UIP-1 and the charging unit 12, and supplies power to the power consumption module 24 through the switch K1, the pogo pin 311, the voltage and current detection unit UIP-3, the switch K3, and the charging unit 22.

After determining that the power adapter connected to the power interface 15 is used as the power supply to supply power to the tablet computer 10 and the keyboard device 20, the electronic device 1 may first set the charging unit 22 to the high resistance state, to determine a power supply current **I,** and compare the power supply current I with the preset current I₀. If I>I₀, it indicates that an exception occurs on the power supply path. In this case, the switch K1 and the switch K3 are turned off, to stop supplying power to the keyboard device 20. Alternatively, if I≤I₀, it indicates that no exception occurs on the power supply path. In this case, power may be supplied to the keyboard device 20. Then, the electronic device 1 may determine an impedance Z of the power supply path, and compare the power supply impedance Z with the preset impedance Z₀. If Z<Z₀, power is supplied to the keyboard device 20 at the first power; or if Z≥Z₀, power is supplied to the keyboard device 20 at the second power. In addition, in a process of supplying power to the keyboard device 20, a temperature T of the connection area between the tablet computer 10 and the keyboard device 20 may be further detected through the temperature detection unit TP-1, and the temperature T is compared with a first preset temperature T1 and a second preset temperature T2 (T2>T1). If T<T1, it indicates that the temperature of the connection area is normal, and a current supply power is maintained; if T≥T2, it indicates that the temperature of the connection area is excessively high, and power supplying to the keyboard device 20 is stopped; or if T≤T1<T2, it indicates that the temperature of the connection area is high, but power consumption safety is not affected, and the current supply power is reduced.

It may be understood that, for the power supply path shown in FIG. 3C, the power supply current I may be a difference between a current I₅ input through the power interface 15 and the current I₁ detected by the voltage and current detection unit UIP-1.

It may be understood that, for the power supply path shown in FIG. 3C, the power supply impedance Z may be represented as (U₁-U₃)/I₃ or (U₁-U₃)/(I₅-I₁), where U₃ and I₃ are respectively the voltage and the current detected by the voltage and current detection unit UIP-3, and U₁ is the voltage detected by the voltage and current detection unit UIP1.

Finally, a technical solution in which the power supply module PS-2 is used as the primary power supply module and a power adapter connected to the power interface 25 is used as the power supply is described.

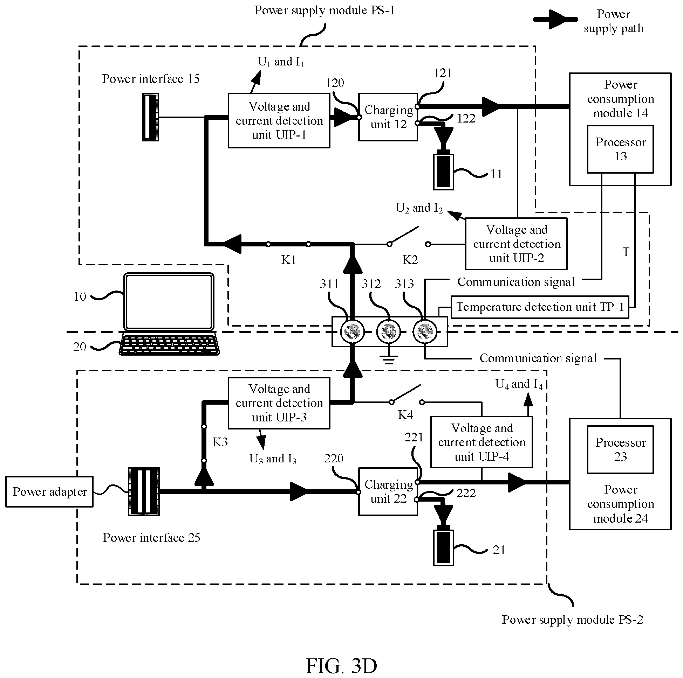

FIG. 3D is a diagram of a power supply path in a case in which the power adapter connected to the power interface 25 is used as the power supply to supply power to the tablet computer 10 and the keyboard device 20 according to some embodiments of this application.

Refer to FIG. 3D. In some embodiments, the electronic device 1 may alternatively set the charging unit 12 and the charging unit 22 to be in the charging mode, turn on the switch K1 and the switch K3, and turn off the switch K2 and the switch K4, to supply power to the tablet computer 10 and the keyboard device 20 by using the power adapter connected to the power interface 25 as the power supply. The power adapter connected to the power interface 25 supplies power to the power consumption module 24 through the charging unit 22, and supplies power to the power consumption module 14 through the switch K3, the pogo pin 311, the switch K1, the voltage and current detection unit UIP-1, and the charging unit 12.

After determining that the power adapter connected to the power interface 25 is used as the power supply to supply power to the tablet computer 10 and the keyboard device 20, the electronic device 1 may set the charging unit 12 to the high resistance state to determine a power supply current I, and compare the power supply current I with the preset current I₀. If I>I₀, it indicates that an exception occurs on the power supply path. In this case, the switch K1 and the switch K3 are turned off, to stop supplying power to the tablet computer 10. Alternatively, if I≤I₀, it indicates that no exception occurs on the power supply path. In this case, power may be supplied to the tablet computer 10. Then, the electronic device 1 may determine an impedance Z of the power supply path, and compare the power supply impedance Z with the preset impedance Z₀. If Z<Z₀,power is supplied to the tablet computer 10 at the first power; or if Z≥Z₀, power is supplied to the tablet computer 10 at the second power. In addition, in a process of supplying power to the tablet computer 10, a temperature T of the connection area between the tablet computer 10 and the keyboard device 20 may be further detected through the temperature detection unit TP-1, and the temperature T is compared with a first preset temperature T1 and a second preset temperature T2 (T2>T1). If T<T1, it indicates that the temperature of the connection area is normal, and a current supply power is maintained; if T≥T2, it indicates that the temperature of the connection area is excessively high, and power supplying to the tablet computer 10 is stopped; or if T≤T1<T2, it indicates that the temperature of the connection area is high, but power consumption safety is not affected, and the current supply power is reduced.

It may be understood that, for the power supply path shown in FIG. 3D, the power supply current I may be the current I₃ detected by the voltage and current detection unit UIP-3. Therefore, when the pogo pin 311 and the pogo pin 312 are short-circuited, the current I₃ is far higher than the preset current I₀. It may be understood that, in some other embodiments, the power supply current I may alternatively be represented by another current value, for example, the current I₁ detected by the voltage and current detection unit UIP-1. This is not limited herein.

It may be understood that, for the power supply path shown in FIG. 3D, the power supply impedance Z may be represented as (U₃-U₁)/I₁ or (U₃-U₁)/I₃, where U₁ and I₁ are respectively the voltage and the current detected by the voltage and current detection unit UIP-1, and U₃ and I₃ are respectively the voltage and the current detected by the voltage and current detection unit UIP-3.

Based on the power supply module of the electronic device 1 shown in FIG. 2B, regardless of whether the power supply module PS-1 or the power supply module PS-2 is used as the primary power supply module, the primary power supply module supplies power to the secondary power consumption device only when the power supply current I is less than the preset current I₀, and supplies power at the first power when the power supply impedance Z is less than the preset impedance Z₀, and at a lower power when the power supply impedance Z is greater than or equal to the preset impedance Z₀. In addition, in a process in which the primary power supply module supplies power to the secondary power consumption device, if it is detected that the temperature T of the connection area between the tablet computer 10 and the keyboard device 20 is greater than or equal to the second preset temperature T2, the primary power supply module stops supplying power to the secondary power consumption device; or if it is detected that the temperature T of the connection area between the tablet computer 10 and the keyboard device 20 is greater than or equal to the first preset temperature T1 and less than T2, a power at which power is supplied to the secondary power consumption device is reduced. In this way, the temperature of the connection area between the tablet computer 10 and the keyboard device 20 can be effectively reduced, so that power consumption safety of the electronic device 1 can be improved, and user experience can be improved.

It may be understood that, in FIG. 2B, that four voltage and current detection units are used to obtain the power supply current and a power supply voltage is merely an example. In some other embodiments, more or fewer voltage and current detection units may be used. This is not limited herein.

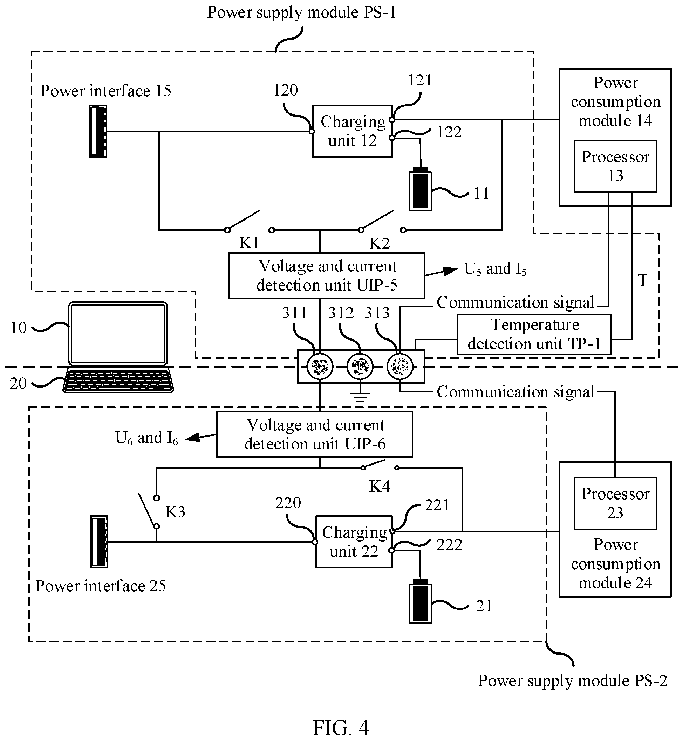

For example, FIG. 4 is a diagram of a structure of a power supply module of an electronic device 1 in which only two voltage and current detection units are used according to some embodiments of this application.

As shown in FIG. 4, compared with the power supply module shown in FIG. 2B, in the power supply module shown in FIG. 4, the voltage and current detection unit UIP-1 to the voltage and current detection unit UIP-4 are omitted, a voltage and current detection unit UIP-5 is added between a connection point between the original switch K1 and the switch K2 and the pogo pin 311, and a voltage and current detection unit UIP-6 is added between a connection point between the original switch K3 and the switch K4 and the pogo pin 311. In addition, the voltage and current detection unit UIP-5 may detect a current I₅ flowing through the voltage and current detection unit UIP-5 and an input or output voltage U₅; and the voltage and current detection unit UIP-6 may detect a current I₆ flowing through the voltage and current detection unit UIP-6 and an input or output voltage U₆.

It may be understood that, in the case shown in FIG. 4, when different power supplies are used to supply power, for manners of turning on and off the switches, refer to the embodiments shown in FIG. 2B to FIG. 3D. Details are not described herein again.

It may be understood that, in the case shown in FIG. 4, if the battery 11 or the power adapter connected to the power interface 15 is used as the power supply, the power supply current I may be the current I₅ detected by the voltage and current detection unit UIP-5; or if the battery 21 or the power adapter connected to the power interface 25 is used as the power supply, the power supply current I may be the current I₆ detected by the voltage and current detection unit UIP-5. The power supply impedance Z may be represented as |U₆-U₅|/I₅ or |U₆-U₅|/I₆, where | | represents obtaining an absolute value.

It may be understood that the structure of the power supply module of the electronic device 1 shown in FIG. 2B is merely an example. In some other embodiments, the structure of the electronic device 1 may be another structure, or some modules may be combined or split. This is not limited herein.

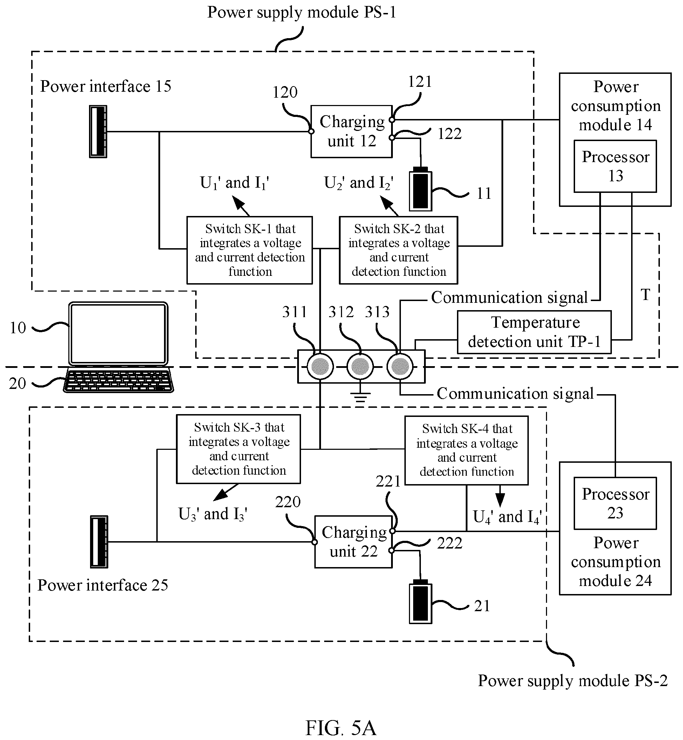

For example, FIG. 5A to FIG. 5C show diagrams of structures of power supply modules of electronic devices 1 different from that shown in FIG. 2B

Refer to FIG. 5A. In some embodiments, the voltage and current detection unit UIP-1 and the switch K1 may be combined, and functions of the voltage and current detection unit UIP-1 and the switch K1 are implemented through a switch SK-1 that integrates a voltage and current detection function (a switch SK-1 for short), where the switch SK-1 can detect a voltage U₁' of the switch SK-1 and a current I₁' that flows through the switch SK-1. The voltage and current detection unit UIP-2 and the switch K2 are combined, and functions of the voltage and current detection unit UIP-2 and the switch K2 are implemented through a switch SK-2 that integrates a voltage and current detection function (a switch SK-2 for short), where the switch SK-2 can detect a voltage U₂' of the switch SK-2 and a current I₂' flowing through the switch SK-2. The voltage and current detection unit UIP-3 and the switch K3 are combined, and functions of the voltage and current detection unit UIP-3 and the switch K3 are implemented through a switch SK-3 that integrates a voltage and current detection function (a switch SK-3 for short), where the switch SK-3 can detect a voltage U₃' of the switch SK-3 and a current I₃' flowing through the switch SK-3. The voltage and current detection unit UIP-4 and the switch K4 are combined, and the functions of the voltage and current detection unit UIP-4 and the switch K4 are implemented through a switch SK-4 that integrates a voltage and current detection function (a switch SK-4 for short), where the switch SK-4 can detect a voltage U₄' of the switch SK-4 and a current I₄' flowing through the switch SK-4.

It may be understood that, based on the structure of the power supply module shown in FIG. 5A, if the battery 11 is used as the power supply, the power supply current I may be the current I₂' detected by the switch SK-2; if the battery 21 is used as the power supply, the power supply current I may be the current I₄' detected by the switch SK-4; if the power adapter connected to the power interface 15 is used as the power supply, the power supply current I may be the current I₁' detected by the switch SK-1; or if the power adapter connected to the power interface 25 is used as the power supply, the power supply current may be the current I₃' detected by the switch SK-3.

It may be understood that, based on the structure of the power supply module shown in FIG. 5A, if the battery 11 is used as the power supply, the power supply impedance Z may be represented as (U₂'-U₃')/I₂' or (U₂'-U₃')/I₃'; if the battery 21 is used as the power supply, the power supply impedance Z may be represented as (U₄'-U₁')/I₄' or (U₄'-U₁')/I₁'; if the power adapter connected to the power interface 15 is used as the power supply, the power supply impedance Z may be represented as (U₁'-U₃")/I₁" or (U₁'-U₃')/I₃'; or if the power adapter connected to the power interface 25 is used as the power supply, the power supply impedance Z may be represented as (U₃'-U₁')/I₁' or (U₃'-U₁')/I₃'.

It may be understood that, based on the structure of the power supply module shown in FIG. 5A, for a technical solution of adjusting, based on the power supply current I, the power supply impedance Z, and the temperature T of the connection area between the tablet computer 10 and the keyboard device 20, the power at which the primary power supply module supplies power to the secondary power consumption device, refer to the embodiments in FIG. 2B to FIG. 3D. Details are not described herein again.

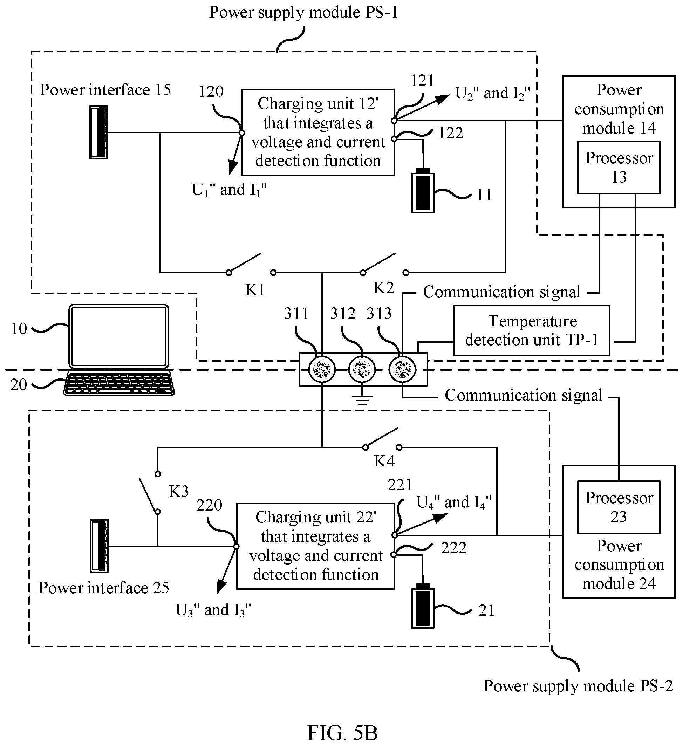

Refer to FIG. 5B. In some embodiments, the voltage and current detection unit UIP-1, the voltage and current detection unit UIP-2, and the charging unit 12 may be combined, and functions of the voltage and current detection unit UIP-1, the voltage and current detection unit UIP-2, and the charging unit 12 are implemented through a charging unit 12' that integrates a voltage and current detection function (a charging unit 12' for short). The charging unit 12' may detect a voltage U₁" at the input end 120, a current I₁" flowing through the input end 120, a voltage U₂" at the output end 121, and a current I₂" flowing through the output end 121. Still refer to FIG. 5B. In some embodiments, the voltage and current detection unit UIP-3, the voltage and current detection unit UIP-4, and the charging unit 22 may be combined, and functions of the voltage and current detection unit UIP-3, the voltage and current detection unit UIP-4, and the charging unit 22 are implemented through a charging unit 22' that integrates a voltage and current detection function (a charging unit 22' for short). The charging unit 22' may detect a voltage U₃" at the input end 220, a current I₃" flowing through the input end 220, a voltage U₄" at the output end 221, and a current I₄" flowing through the output end 221.

It may be understood that, based on the structure of the power supply module shown in FIG. 5B, if the battery 11 or the power adapter connected to the power interface 15 is used as the power supply, the power supply current I may be a difference between the current I₂" that is output by the output end 121 and that is detected by the charging unit 12 and a current input to the power consumption module 14. If the battery 21 or the power adapter connected to the power interface 25 is used as the power supply, the power supply current I may be a difference between the current I₁" that is output by the output end 221 and that is detected by the charging unit 22 and a current input to the power consumption module 24.

It may be understood that, based on the structure of the power supply module shown in FIG. 5B, if the battery 11 is used as the power supply, the power supply impedance Z may be represented as (U₂"-U₃")/I₂" or (U₂"-U₃")/I₃"; if the battery 21 is used as the power supply, the power supply impedance Z may be represented as (U₄"-U₁")/I₄" or (U₄"-U₁")/I₁"; if the power adapter connected to the power interface 15 is used as the power supply, the power supply impedance Z is represented as (U₁"-U₃")/I₃"; or if the power adapter connected to the power interface 25 is used as the power supply, the power supply impedance Z is represented as (U₃"-U₁")/I₁".

It may be understood that, based on the structure of the power supply module shown in FIG. 5B, for a technical solution of adjusting, based on the power supply current I, the power supply impedance Z, and the temperature T of the connection area between the tablet computer 10 and the keyboard device 20, the power at which the primary power supply module supplies power to the secondary power consumption device, refer to the embodiments in FIG. 2B to FIG. 3D. Details are not described herein again.

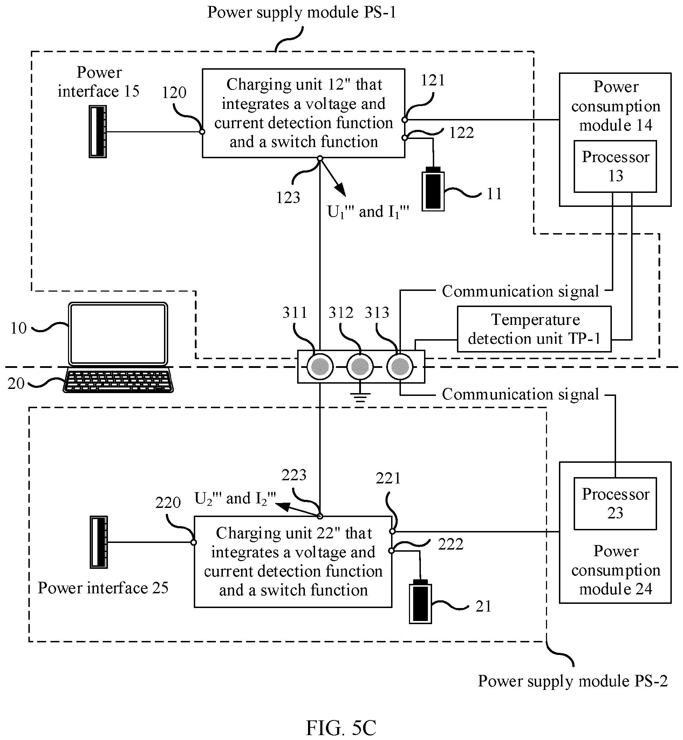

Refer to FIG. 5C. In some embodiments, the voltage and current detection unit UIP-1, the voltage and current detection unit UIP-2, the switch K1, the switch K2, and the charging unit 12 may be combined, and functions of the voltage and current detection unit UIP-1, the voltage and current detection unit UIP-2, the switch K1, the switch K2, and the charging unit 12 are implemented through a charging unit 12" that integrates a voltage and current detection function and a switch function (a charging unit 12" for short). A port 123 is added to the charging unit 12", and the port 123 is electrically connected to the pogo pin 311. The charging unit 12" may connect the port 123 to the input port 120 or the input port 121 based on an instruction of the processor 13 or the processor 23. In addition, the charging unit 12" may detect a voltage U₁"' at the port 123 and a current I₁'" flowing through the port 123. Still refer to FIG. 5C. In some embodiments, the voltage and current detection unit UIP-3, the voltage and current detection unit UIP-4, the switch K3, the switch K4, and the charging unit 22 may be combined, and functions of the voltage and current detection unit UIP-3, the voltage and current detection unit UIP-4, the switch K3, the switch K4, and the charging unit 22 are implemented through a charging unit 22" that integrates a voltage and current detection function and a switch function (a charging unit 22" for short). A port 223 is added to the charging unit 22", and the port 123 is electrically connected to the pogo pin 311. The charging unit 22" may connect the port 223 to the input port 220 or the input port 221 based on an instruction of the processor 13 or the processor 23. In addition, the charging unit 22" may detect a voltage U₂'" at the port 223 and a current I₂'" flowing through the port 223.

It may be understood that, based on the structure of the power supply module shown in FIG. 5C, if the battery 11 or the power adapter connected to the power interface 15 is used as the power supply, the power supply current I may be the current I₁'" at the port 123 that is detected by the charging unit 12"; or if the battery 21 or the power adapter connected to the power interface 25 is used as the power supply, the power supply current I may be the current I₂"' at the port 223 that is detected by the charging unit 22".

It may be understood that, based on the structure of the power supply module shown in FIG. 5C, the power supply impedance Z may be represented as |U₁"'-U₂"'|/I₁"' or |U₁"'-U₂"'|/I₂"', where | | represents obtaining an absolute value.

It may be understood that, based on the structure of the power supply module shown in FIG. 5C, for a technical solution of adjusting, based on the power supply current I, the power supply impedance Z, and the temperature T of the connection area between the tablet computer 10 and the keyboard device 20, the power at which the primary power supply module supplies power to the secondary power consumption device, refer to the embodiments in FIG. 2B to FIG. 3D. Details are not described herein again.

The following describes the technical solutions in embodiments of this application with reference to the power supply paths shown in FIG. 3A to FIG. 3D and the structures of the power supply modules shown in FIG. 4 to FIG. 5C.

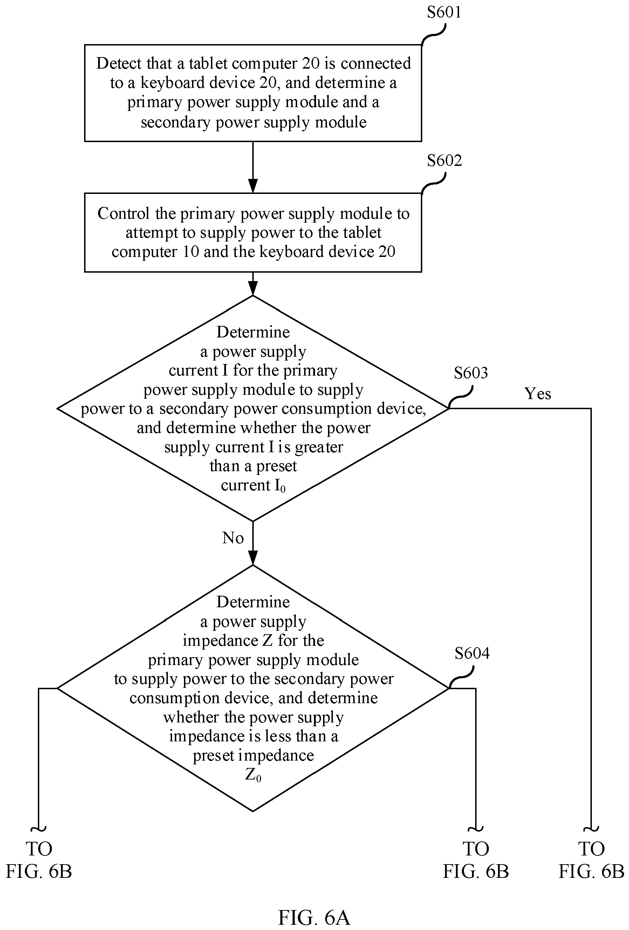

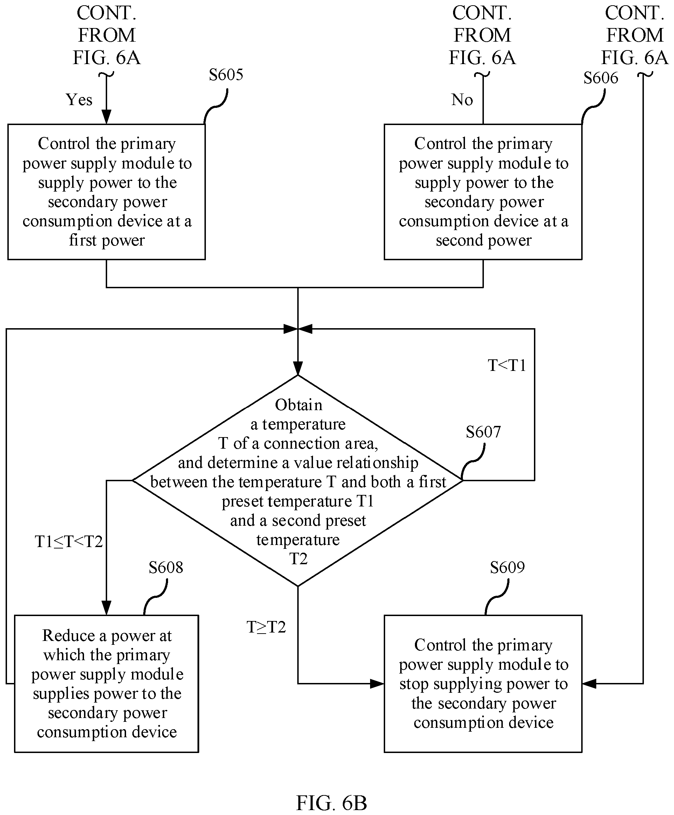

Specifically, FIG. 6A and FIG. 6B are a schematic flowchart of a power supply method according to some embodiments of this application. The procedure is executed by a processor 13. As shown in FIG. 6A and FIG. 6B, the procedure includes the following steps.

S601: Detect that a tablet computer 20 is connected to a keyboard device 20, and determine a primary power supply module and a secondary power supply module.

In some embodiments, when detecting that there is a signal input to a GPIO interface connected to a pogo pin 313, the processor 13 may determine that the tablet computer 20 has been connected to the keyboard device, to determine the primary power supply module and the secondary power supply module.

It may be understood that the primary power supply module is a power supply module that supplies power to the tablet computer 10 and the keyboard device 20.

For example, when neither the tablet computer 10 nor the keyboard device 20 is connected to a power adapter, the primary power supply module may be a power supply module corresponding to a battery with a larger state of charge. For example, in the power supply path shown in FIG. 3A, the primary power supply module may be the power supply module PS-1; and in the power supply path shown in FIG. 3B, the primary power supply module may be the power supply module PS-2.

For example, when one of the tablet computer 10 and the keyboard device 20 is connected to the power adapter, the primary power supply module may be a power supply module connected to the power adapter. For example, in the power supply path shown in FIG. 3C, the power interface 15 is connected to the power adapter, and the primary power supply module may be the power supply module PS-1; and in the power supply path shown in FIG. 3D, the power interface 25 is connected to the power adapter, and the primary power supply module may be the power supply module PS-2.

It may be understood that, in some other embodiments, the processor 13 may alternatively determine the primary power supply module in another manner. This is not limited herein.

S602: Control the primary power supply module to attempt to supply power to the tablet computer 10 and the keyboard device 20.

In some embodiments, after determining the primary power supply module, the processor 13 may control the primary power supply module to attempt to supply power to the tablet computer 10 and the keyboard device 20 by adjusting working modes of charging units and an impedance of a charging unit in a secondary power consumption device, and turning on or turning off switches in the power supply modules.

For example, in the cases shown in FIG. 3A, FIG. 4, and FIG. 5B, the processor 13 may set the charging unit 12 to be in a discharging mode, set the charging unit 22 to be in a charging mode, set the keyboard device 20 to a high resistance state, turn on the switch K2 and the switch K3, and turn off the switch K1 and the switch K4, to control the power supply module PS-1 to attempt to supply power to the tablet computer 10 and the keyboard device 20 by using the battery 11 as a power supply.

It may be understood that in the scenario shown in FIG. 5A, the processor 13 may set the charging unit 12 to be in the discharging mode, set the charging unit 22 to be in the charging mode and the high resistance state, turn on the switch SK-2 and the switch SK-3, and turn off the switch SK-1 and the switch SK-4, to control the power supply module PS-1 to attempt to supply power to the tablet computer 10 and the keyboard device 20 by using the battery 11 as the power supply.

It may be understood that in the case shown in FIG. 5C, the processor 13 may set the charging unit 12" to be in the discharging mode, connect the output end 121 and the port 123, set the charging unit 22" to be in the charging mode, connect the input end 220 and the port 223, and set the charging unit 22 to the high resistance state, to control the power supply module PS-1 to attempt to supply power to the tablet computer 10 and the keyboard device 20 by using the battery 11 as the power supply.

For example, in the cases shown in FIG. 3B, FIG. 4, and FIG. 5B, the processor 13 may set the charging unit 12 to be in the charging mode, set the charging unit 22 to be in the discharging mode, set the charging unit 12 to the high resistance state, turn on the switch K1 and the switch K4, and turn off the switch K2 and the switch K3, to control the power supply module PS-2 to attempt to supply power to the tablet computer 10 and the keyboard device 20 by using the battery 21 as the power supply.

It may be understood that in the case shown in FIG. 5A, the processor 13 may set the charging unit 12 to be in the discharging mode and the high resistance state, set the charging unit 22 to be in the discharging mode, turn on the switch SK-1 and the switch SK-4, and turn off the switch SK-2 and the switch SK-3, to control the power supply module PS-2 to attempt to supply power to the tablet computer 10 and the keyboard device 20 by using the battery 21 as the power supply.

It may be understood that in the case shown in FIG. 5C, the processor 13 may set the charging unit 12" to be in the charging mode, connect the input end 120 and the port 123, set the charging unit 22" to be in the discharging mode, connect the output end 221 and the port 223, and set the charging unit 12" to the high resistance state, to control the power supply module PS-2 to attempt to supply power to the tablet computer 10 and the keyboard device 20 by using the battery 21 as the power supply.

For example, in the cases shown in FIG. 3C, FIG. 4, and FIG. 5B, the processor 13 may set the charging unit 12 and the charging unit 22 to be in the charging mode, set the charging unit 22 to the high resistance state, turn on the switch K1 and the switch K3, and turn off the switch K2 and the switch K4, to control the power supply module PS-1 to attempt to supply power to the tablet computer 10 and the keyboard device 20 by using the power adapter connected to the power interface 15 as the power supply.

It may be understood that in the case shown in FIG. 5A, the processor 13 may set the charging unit 12 and the charging unit 22 to be in the charging mode, set the charging unit 22 to the high resistance state, turn on the switch SK-1 and the switch SK-3, and turn off the switch SK-2 and the switch SK-4, to control the power supply module PS-1 to attempt to supply power to the tablet computer 10 and the keyboard device 20 by using the power adapter connected to the power interface 15 as the power supply.

It may be understood that in the case shown in FIG. 5C, the processor 13 may set the charging unit 12" to be in the charging mode, connect the input end 120 and the port 123, set the charging unit 22" to be in the charging mode, connect the input end 220 and the port 223, and set the charging unit 22 to the high resistance state, to control the power supply module PS-1 to attempt to supply power to the tablet computer 10 and the keyboard device 20 by using the power adapter connected to the power interface 15 as the power supply.

For example, in the cases shown in FIG. 3D, FIG. 4, and FIG. 5B, the processor 13 may set the charging unit 12 and the charging unit 22 to be in the charging mode, set the charging unit 12 to the high resistance state, turn on the switch K1 and the switch K3, and turn off the switch K2 and the switch K4, to control the power supply module PS-2 to attempt to supply power to the tablet computer 10 and the keyboard device 20 by using the power adapter connected to the power interface 25 as the power supply.

It may be understood that in the case shown in FIG. 5A, the processor 13 may set the charging unit 12 and the charging unit 22 to be in the charging mode, set the charging unit 22 to the high resistance state, turn on the switch SK-1 and the switch SK-3, and turn off the switch SK-2 and the switch SK-4, to control the power supply module PS-2 to attempt to supply power to the tablet computer 10 and the keyboard device 20 by using the power adapter connected to the power interface 25 as the power supply.

It may be understood that in the case shown in FIG. 5C, the processor 13 may set the charging unit 12" to be in the charging mode, connect the input end 120 and the port 123, set the charging unit 22" to be in the charging mode, connect the input end 220 and the port 223, and set the charging unit 12" to the high resistance state, to control the power supply module PS-2 to attempt to supply power to the tablet computer 10 and the keyboard device 20 by using the power adapter connected to the power interface 25 as the power supply.

It may be understood that, in some other embodiments, for an electronic device 1 that uses a power supply module of another structure, the processor 13 may alternatively control, in another manner, the primary power supply module to attempt to supply power to the tablet computer 10 and the keyboard device 20. This is not limited herein.

S603: Determine a power supply current I for the primary power supply module to supply power to the secondary power consumption device, and determine whether the power supply current is greater than a preset current I₀.

In some embodiments, the processor 13 may obtain, by using a module or unit configured to collect a current in the primary power supply module and the secondary power supply module, the power supply current I used by the primary power supply module to supply power to the secondary power consumption device, and determine whether the power supply current I is greater than the preset current I₀. If it is determined that the power supply current I is greater than the preset current I₀, it indicates that an exception may occur on a power supply path in which the primary power supply module supplies power to the secondary power consumption device. In this case, the procedure goes to step S609. If it is determined that the power supply current I is not greater than the preset current I₀, it indicates that no exception occurs on the power supply path in which the primary power supply module supplies power to the secondary power consumption device, and the primary power supply module may supply power to the secondary power consumption device. In this case, the procedure goes to step S604.

It may be understood that, in some embodiments, the preset current I₀ may be set based on a circuit structure of the electronic device 1, a voltage of a battery 11 and/or a battery 21, an impedance of a circuit of the electronic device 1, and the like. For example, the preset current I₀ may be 3.5 A, 5 A, or the like. In some other embodiments, the preset current I₀ may alternatively be another value. This is not limited herein.

It may be understood that, in some embodiments, when primary power supply modules are different, preset currents I₀ may be the same or may be different. For a same primary power supply module, when power supplies of the primary power supply module are different, corresponding preset currents I₀ may be the same or may be different. This is not limited herein.

For example, in the case shown in FIG. 3A, the power supply current I may be the foregoing I₂; in the case shown in FIG. 3B, the power supply current I may be the foregoing I₄. In the case shown in FIG. 3C, the power supply current I may be a difference obtained by subtracting I₃ from a current input through the power interface 15. In the case shown in FIG. 3D, the power supply current I may be the foregoing I₃.

For example, in the case shown in FIG. 4, if the primary power supply module is the power supply module PS-1, the power supply current I may be the current I₅ detected by the voltage and current detection unit UIP-5; or if the primary power supply module is the power supply module PS-2, the power supply current I may be the current I₆ detected by the voltage and current detection unit UIP-6.

For example, in the case shown in FIG. 5A, if the battery 11 is used as the power supply, the power supply current I may be the foregoing I₂; if the battery 21 is used as the power supply, the power supply current I may be the foregoing I₄; or if the power adapter connected to the power interface 15 or the power interface 25 is used as the power supply, the power supply current I may be the foregoing I₁ or I₃.

For example, in the case shown in FIG. 5B, if the power adapter connected to the battery 11 or the power interface 15 is used as the power supply, the power supply current I may be a difference between the foregoing I₂" and a current input to the power consumption module 14; or if the power adapter connected to the battery 21 or the power interface 25 is used as the power supply, the power supply current I may be a difference between the foregoing I₄" and a current input to the power consumption module 24.

For example, in the case shown in FIG. 5C, if the primary power supply module is the power supply module PS-1, the power supply current I may be the foregoing I₁‴; or if the primary power supply module is the power supply module PS-2, the power supply current I may be the I₂‴.

It may be understood that, in some other embodiments, for an electronic device 1 that uses a power supply module of another structure, the processor 13 may alternatively obtain the power supply current I in another manner. This is not limited herein.

S604: Determine a power supply impedance Z for the primary power supply module to supply power to the secondary power consumption device, and determine whether the power supply impedance is less than a preset impedance Z₀.

In some embodiments, after determining that the power supply current I is less than or equal to the preset current I₀, the processor 13 may determine, based on a voltage and a current collected by modules or units that are configured to collect the current and the voltage and that are in the primary power supply module and the secondary power supply module, the power supply impedance Z for the primary power supply module to supply power to the secondary power consumption device, and determine whether the power supply impedance Z is less than the preset impedance Z₀. If it is determined that the power supply impedance Z is less than the preset impedance Z₀, it indicates that the primary power supply module can supply power to the secondary power consumption device at the first power. In this case, the process goes to step S605. If it is determined that the power supply impedance Z is not less than the preset impedance Z₀, it indicates that the primary power supply module can supply power to the secondary power consumption device only at the second power. In this case, the process goes to step S606.

It may be understood that, in some embodiments, the preset impedance Z₀ may be set based on the circuit structure of the electronic device 1, the voltage of the battery 11 and/or the battery 21, the impedance of the circuit of the electronic device 1, and the like. For example, an impedance obtained when no exception occurs on connection of the electrical connector may be used as the preset impedance Z₀. For example, in the case shown in FIG. 3A, the preset impedance Z₀ may be represented as (U₂₋₀-U₃₋₀)/I₂₋₀, where U₂₋₀, I₂₋₀, and U₃₋₀ are respectively a voltage collected by the voltage and current detection unit UIP-2, a current collected by the voltage and current detection unit UIP-2, and a voltage collected by the voltage and current detection unit UIP-3 when no exception occurs on the pogo pin 311 and the pogo pin 312.

It may be understood that, in some embodiments, when primary power supply modules are different, preset impedances Z₀ may be the same or may be different. For a same primary power supply module, when power supplies of the primary power supply module are different, corresponding preset impedances Z₀ may be the same or may be different. This is not limited herein.

For example, in the case shown in FIG. 3A, the power supply impedance Z may be represented as (U₂-U₃)/I₂ or (U₂-U₃)/I₃. In the case shown in FIG. 3B, the power supply impedance Z may be represented as (U₄-U₁)/I₄ or (U₄-U₁)/I₁. In the case shown in FIG. 3C, the power supply impedance Z may be represented as (U₁-U₃)/I₃. In the case shown in FIG. 3D, the power supply impedance Z may be represented as (U₃-U₁)/I₁ or (U₃-U₁)/I₃.

For example, in the case shown in FIG. 4, the power supply impedance Z may be represented as |U₆-U₅|/I₅ or |U₆-U₅|/I6, where | | represents obtaining an absolute value.

For example, in the case shown in FIG. 5A, if the battery 11 is used as the power supply, the power supply impedance Z may be represented as (U₂'-U₃')/I₂' or (U₂'-U₃')/I₃'; if the battery 21 is used as the power supply, the power supply impedance Z may be represented as (U₄'-U₁')/I₄' or (U₄'-U₁')/I₁'; if the power adapter connected to the power interface 15 is used as the power supply, the power supply impedance Z may be represented as (U₁'-U₃')/I₁' or (U₁'-U₃')/I₃'; or if the power adapter connected to the power interface 25 is used as the power supply, the power supply impedance Z may be represented as (U₃'-U₁')/I₁' or (U₃'-U₁')/I₃'.

For example, in the case shown in FIG. 5B, if the battery 11 is used as the power supply, the power supply impedance Z may be represented as (U₂"-U₃")/I₂" or (U₂"-U₃")/I₃"; if the battery 21 is used as the power supply, the power supply impedance Z may be represented as (U₄"-U₁")/I₄" or (U₄"-U₁")/I₁"; if the power adapter connected to the power interface 15 is used as the power supply, the power supply impedance Z is represented as (U₁"-U₃")/I₃"; or if the power adapter connected to the power interface 25 is used as the power supply, the power supply impedance Z is represented as (U₃"-U₁")/I₁".

For example, in the case shown in FIG. 5C, the power supply impedance Z may be represented as |U₁‴-U₂‴|/I₁‴ or |U₁‴-U₂‴|/I₂‴.

It may be understood that, in some other embodiments, for an electronic device 1 that uses a power supply module of another structure, the processor 13 may alternatively determine the power supply impedance Z in another manner. This is not limited herein.

S605: Control the primary power supply module to supply power to the secondary power consumption device at the first power.

After determining that the power supply impedance Z is less than the preset impedance Z₀, the processor 13 may control the primary power supply module to supply power to the power consumption device at the first power.

It may be understood that, in some embodiments, the first power may be an empirical value or an experimental value, or may be a maximum power that can be provided by the primary power supply module, or may be a peak power consumed by the secondary power consumption device. For example, when a power of a power adapter connected to the primary power consumption device is 65 W, the first power may be 65 W. For another example, in FIG. 2A, assuming that a peak power consumed by the keyboard device 20 is 30 W, the first power may be 30 W. In some other embodiments, the first power may alternatively be another value, and a specific value of the first power is not limited herein.

It may be understood that, in some embodiments, control modules in the charging unit 12, the charging unit 12', the charging unit 12", the charging unit 13, the charging unit 13', and the charging unit 13" may include current-limiting registers configured to control output currents of the charging units. The processor 13 may control, by writing different current-limiting values into the current-limiting registers, upper limits of currents that pass through the charging units, to adjust a supply power at which the primary power supply module supplies power to the secondary power consumption device. For example, assuming that the first power is 65 W, and a voltage of each power supply module is 20 V, a current limiting value corresponding to the first power may be 3.25 A. If the voltage of each power supply module is 20 V, the first power is 65 W.

For example, in the cases shown in FIG. 3A and FIG. 3C, the processor 13 may write the current limiting value corresponding to the first power into the current limiting register in the charging unit 22, to control the primary power supply module to supply power to the secondary power consumption device at the first power. It may be understood that, in some embodiments, the processor 13 may send, to the processor 23, an instruction for writing the current limiting value corresponding to the first power to the current limiting register in the charging unit 22, and the processor 23 writes the first power to the current limiting register in the charging unit 22 in response to the instruction.

For example, in the cases shown in FIG. 3B and FIG. 3D, the processor 13 may write the current limiting value corresponding to the first power into the current limiting register in the charging unit 12, to control the primary power supply module to supply power to the secondary power consumption device at the first power.

For example, in the case shown in FIG. 5A, when the primary power supply module is the power supply module PS-1, the processor 13 may send, to the processor 23, an instruction for writing the current limiting value corresponding to the first power to the current limiting register in the charging unit 22, and the processor 23 writes the current limiting value corresponding to the first power to the current limiting register in the charging unit 22 in response to the instruction, to control the primary power supply module to supply the secondary power consumption device at the first power. When the primary power supply module is the power supply module PS-2, the processor 13 may write the current limiting value corresponding to the first power into the current limiting register in the charging unit 12, to control the primary power supply module to supply power to the secondary power consumption device at the first power.

For example, in the case shown in FIG. 5B, when the primary power supply module is the power supply module PS-1, the processor 13 may send, to the processor 23, an instruction for writing the current limiting value corresponding to the first power to the current limiting register in the charging unit 22', and the processor 23 writes the current limiting value corresponding to the first power to the current limiting register in the charging unit 22' in response to the instruction, to control the primary power supply module to supply the secondary power consumption device at the first power. When the primary power supply module is the power supply module PS-2, the processor 13 may write the current limiting value corresponding to the first power into the current limiting register in the charging unit 12', to control the primary power supply module to supply power to the secondary power consumption device at the first power.

For example, in the case shown in FIG. 5C, when the primary power supply module is the power supply module PS-1, the processor 13 may send, to the processor 23, an instruction for writing the current limiting value corresponding to the first power to the current limiting register in the charging unit 22", and the processor 23 writes the current limiting value corresponding to the first power to the current limiting register in the charging unit 22" in response to the instruction, to control the primary power supply module to supply the secondary power consumption device at the first power. When the primary power supply module is the power supply module PS-2, the processor 13 may write the current limiting value corresponding to the first power into the current limiting register in the charging unit 12", to control the primary power supply module to supply power to the secondary power consumption device at the first power.

It may be understood that, in some embodiments, first powers corresponding to different primary power supply modules or current limiting values corresponding to the first power may be the same or may be different. This is not limited in embodiments of this application. For example, a first power used when the primary power supply module is the power supply module PS-2 may be greater than a first power used when the primary power supply module is the power supply module PS-1.

It may be understood that, in some embodiments, for a same primary power supply module, when power supplies of the primary power supply module are different, corresponding first powers or corresponding current limiting values of the first power may be the same or may be different. This is not limited in embodiments of this application. For example, a first power used when the power supply is a power adapter may be greater than a first power used when the power supply is a battery.

S606: Control the primary power supply module to supply power to the secondary power consumption device at the second power.

After determining that the power supply impedance Z is greater than or equal to the preset impedance Z₀, the processor 13 may control the primary power supply module to supply power to the power consumption device at the second power. In some embodiments, the second power is less than the first power.

It may be understood that, in some embodiments, the second power may be an empirical value or an experimental value less than the first power, or may be a value dynamically adjusted based on the power supply impedance Z. For example, when a value of the first power is 65 W, a value of the second power may be 20 W. For another example, when the power supply impedance Z has different values, a relationship in which a temperature T' of the connection area between the tablet computer 10 and the keyboard device 20 varies with the second power within preset duration may be obtained through experiment, to further determine values of the second power, at the different values of the power supply impedance Z, when the temperature T' is less than a preset value. In this way, different values of the second power may be used based on the different values of the power supply impedance Z. It may be understood that, in some other embodiments, the second power may alternatively be another value less than the first power, for example, 30 W, 16 W, or 10 W. This is not limited herein.

For example, the processor 13 may write different values to the current-limiting registers in the charging units, to control upper limits of the currents that pass through the charging units, so as to adjust the supply power at which the primary power supply module supplies power to the secondary power consumption device. In some embodiments, a current limiting value corresponding to the second power is less than the current limiting value corresponding to the first power. For example, in some embodiments, if the second power is 20 W, and the voltage of each power supply module is 20 V, the current limiting value corresponding to the second power may be 1 A.

It may be understood that, in some embodiments, second powers corresponding to different primary power supply modules or current limiting values corresponding to the second power may be the same or may be different. This is not limited in embodiments of this application. For example, a second power used when the primary power supply module is the power supply module PS-2 may be greater than a second power used when the primary power supply module is the power supply module PS-1.

It may be understood that, in some embodiments, for a same primary power supply module, when power supplies of the primary power supply module are different, corresponding second powers or corresponding current limiting values of the second power may be the same or may be different. This is not limited in embodiments of this application. For example, a second power used when the power supply of the primary power supply module is a power adapter may be greater than a second power used when the power supply is a battery.

S607: Obtain a temperature T of the connection area, and determine a value relationship between the temperature T and both a first preset temperature T1 and a second preset temperature T2.

In some embodiments, in a process in which the primary power supply module supplies power to the secondary power consumption device, the processor 13 may obtain, through a temperature detection unit TP-1, the temperature T of the connection area between the tablet computer 10 and the keyboard device 20, and determine a value relationship between the temperature T and the first preset temperature T1 and the second preset temperature T2 (T2>T1). If it is determined that the temperature T is less than the first preset temperature T1, it indicates that the temperature of the connection area is normal, and the primary power supply module keeps supplying power to the secondary power consumption device at a current supply power, and repeats step S607; if it is determined that the temperature T is greater than or equal to the second preset temperature T2, it indicates that the temperature of the connection area is too high, which may affect power consumption safety, and the process goes to step S609; or if it is determined that the temperature T is greater than or equal to the first preset temperature T1 and is less than the second preset temperature T2, it indicates that the temperature of the connection area is relatively high, but power consumption safety is not affected, and the process goes to step S608.

It may be understood that, in some other embodiments, the temperature T of the connection area may be obtained by disposing a temperature sensor in an area in which the electrical connector is located. The temperature sensor may be disposed in the tablet computer 10, or may be disposed in the keyboard device 20, or the temperature may be obtained by disposing a thermistor in a circuit in which the primary power supply device supplies power to the secondary power consumption device. A manner of obtaining the temperature T of the connection area is not limited in this application.

S608: Reduce a power at which the primary power supply module supplies power to the secondary power consumption device.

In some embodiments, the processor 13 may determine to reduce the power at which the primary power supply module supplies power to the secondary power consumption device when T1≤T<T2.

For example, the processor 13 may write a current limiting value lower than a current current limiting value of the current limiting register to the current limiting register in the charging unit of the secondary power consumption device, to reduce the supply power at which the primary power supply module supplies power to the secondary power consumption device.

S609: Control the primary power supply module to stop supplying power to the secondary power consumption device.

In some embodiments, the processor 13 may determine that when T2≤T, the primary power supply module is controlled to stop supplying power to the secondary power consumption device.

For example, the processor 13 may turn off a corresponding switch to stop supplying power to the secondary power consumption device.

It may be understood that the execution process of step S601 to step S609 is merely an example. In some other embodiments, an execution sequence of some steps may be adjusted, and some steps may be combined or split. This is not limited herein.

It may be understood that the foregoing description in which the processor 13 executes step S601 to step S609 is merely an example. In some other embodiments, some or all of the foregoing steps may be performed by the processor 23 or another module of the electronic device 1. This is not limited herein.

According to the method provided in this embodiment of this application, the primary power supply module supplies power to the secondary power consumption device only when the power supply current I is less than the preset current I₀. In addition, the supply power is determined based on a relationship between the power supply impedance Z and the preset impedance Z₀. That is, when the power supply impedance Z is less than the preset impedance Z₀, power is supplied at the first power; or when the power supply impedance Z is greater than or equal to the preset impedance Z₀, power is supplied at the second power. In addition, in a process in which the primary power supply module supplies power to the secondary power consumption device, if it is detected that the temperature T of the connection area between the tablet computer 10 and the keyboard device 20 is greater than or equal to the second preset temperature T2, the primary power supply module stops supplying power to the secondary power consumption device; or if it is detected that the temperature T of the connection area between the tablet computer 10 and the keyboard device 20 is greater than or equal to the first preset temperature T1 and less than T2, a power at which power is supplied to the secondary power consumption device is reduced. In this way, the temperature of the connection area between the tablet computer 10 and the keyboard device 20 can be effectively reduced, so that power consumption safety of the electronic device 1 can be improved, and user experience can be improved.

It may be understood that the foregoing technical solutions of this application described by using the electronic device 1 as an example are merely an example, and the technical solutions in embodiments of this application are further applicable to any other scenario in which a power supply device is connected to a power consumption device through an electrical connector.

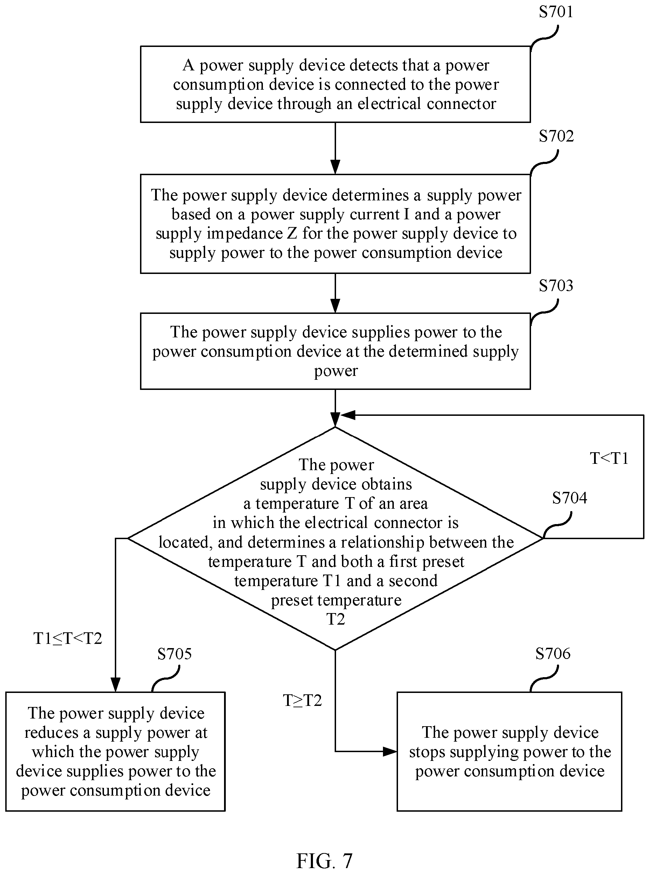

For example, FIG. 7 is a schematic flowchart of another power supply method according to some embodiments of this application.

S701: A power supply device detects that a power consumption device is connected to the power supply device through an electrical connector.

When detecting that the power consumption device is connected to the power supply device through the electrical connector, the power supply device triggers the power supply method provided in this embodiment of this application.

S702: The power supply device determines a supply power based on a power supply current I and a power supply impedance Z for the power supply device to supply power to the power consumption device.

In some embodiments, the power supply device may supply power to the power consumption device at a first power when the power supply current I is less than or equal to a preset current I₀ and the power supply impedance Z is less than a preset impedance Z₀; or supply power to the power consumption device at a second power (where the second power is greater than the first power) when the power supply current I is less than or equal to the preset current I₀ and the power supply impedance Z is greater than or equal to the preset impedance Z₀; or when the power supply current I is greater than the preset current I₀, stop supplying power to the power consumption device, that is, the supply power is 0.

S703: The power supply device supplies power to the power consumption device at the determined supply power.

The power supply device supplies power to the power consumption device at the supply power determined in step S702.

S704: The power supply device obtains a temperature T of an area in which the electrical connector is located, and determines a relationship between the temperature T and both a first preset temperature T1 and a second preset temperature T2.

In some embodiments, in a process of supplying power to the power consumption device, the power supply device obtains the temperature T of the area in which the electrical connector electrically connected to the power supply device and the power consumption device is located, and determines a value relationship between the temperature T and the first preset temperature T1 and the second preset temperature T2 (T2>T1). If it is determined that the temperature T is less than the first preset temperature T1, it indicates that the temperature of the area in which the electrical connector is located is normal, and the power supply device keeps supplying power to the power consumption device at a current supply power, and repeats step S704; if it is determined that the temperature T is greater than or equal to the second preset temperature T2, it indicates that the temperature of the area in which the electrical connector is located is too high, which may affect power consumption safety, and the process goes to step S706; or if it is determined that the temperature T is greater than or equal to the first preset temperature T1 and is less than the second preset temperature T2, it indicates that the temperature of the area in which the electrical connector is located is relatively high, but power consumption safety is not affected, and the process goes to step S705.

It may be understood that, in some embodiments, the temperature T of the area in which the electrical connector is located may be obtained by disposing a temperature sensor in the area in which the electrical connector is located. The temperature sensor may be disposed in the power supply device, or may be disposed in the power consumption device, or the temperature may be obtained by disposing a thermistor in a circuit in which the power supply device supplies power to the power consumption device. A manner of obtaining the temperature T of the area in which the electrical connector is located is not limited in this application.

S705: The power supply device reduces a supply power at which the power supply device supplies power to the power consumption device.

When determining that the temperature T is greater than or equal to the first preset temperature T1 and less than the second preset temperature T2, the power supply device reduces the supply power at which the power supply device supplies power to the power consumption device.

S706: The power supply device stops supplying power to the power consumption device.

When determining that the temperature T is greater than or equal to the second preset temperature T2, the power supply device stops supplying power to the power consumption device.

According to the method provided in this embodiment of this application, the power supply device supplies power to the power consumption device only when the power supply current I is less than the preset current I₀. In addition, the supply power is determined based on a relationship between the power supply impedance Z and the preset impedance Z₀. That is, when the power supply impedance Z is less than the preset impedance Z₀, power is supplied at the first power; or when the power supply impedance Z is greater than or equal to the preset impedance Z₀, power is supplied at the second power. In addition, in a process in which the power supply device supplies power to the secondary power consumption device, the temperature T of the area in which the electrical connector electrically connected to the power supply device and the power consumption device is located is detected. If T≥T2, power supplying to the secondary power consumption device is stopped; or if T1≤T<T2, supply power at which power is supplied to the power consumption device is reduced. In this way, the temperature of the area in which the electrical connector electrically connected to the power supply device and the power consumption device is located can be effectively reduced, safety of supplying power to the power consumption device by the power supply device is improved, and user experience is improved.

It may be understood that the power supply device may be any electronic device that can provide a power supply, and the power consumption device is any electronic device that can be electrically connected to the power supply device and obtain electric energy from the power supply device, including but not limited to a mobile phone, a laptop computer, a smart television, a smart sound box, a tablet computer, a server, a wearable device, a head mounted display, a mobile email device, a portable game console, a portable music player, a reader device, a charger, a mobile power supply, and the like. This is not limited in embodiments of this application.

It may be understood that the power supply device and the power consumption device may be different sub-devices in a same device, or may be different devices. This is not limited herein.

The following describes, by using an example in which the electronic device 1 is a two-in-one computer 1, a structure of an electronic device to which the technical solutions of this application are applicable.

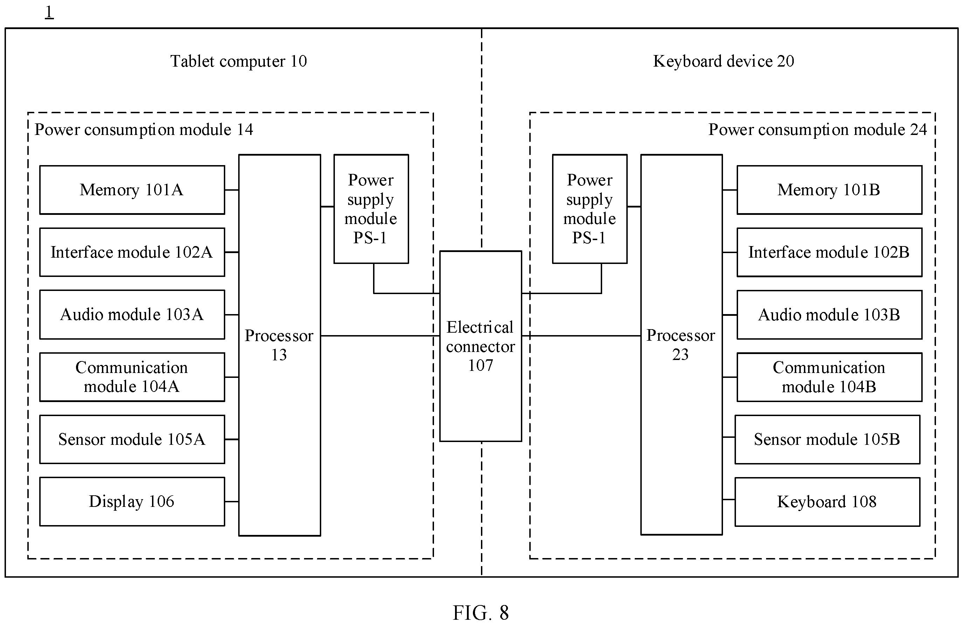

Further, FIG. 8 is a diagram of a hardware structure of the two-in-one computer 1 according to some embodiments of this application.

As shown in FIG. 8, the two-in-one computer 1 includes a processor 13, a processor 23, a memory 101A/101B, an interface module 102A/102B, an audio module 103A/103B, a communication module 104A/104B, a sensor module 105A/105B, a display 106, a power supply module PS-1, a power supply module PS-2, an electrical connector 107, and a keyboard 108. The processor 13, the memory 101A, the interface module 102A, the audio module 103A, the communication module 104A, the sensor module 105A, the display 106, and the power supply module PS-1 are disposed on a side of a tablet computer 10. The processor 23, the memory 101B, the memory 102B, the memory 103B, the memory 104B, the sensor module 105B, the keyboard 108, and the power supply module PS-2 are disposed on a side of a keyboard device 20. In addition, the tablet computer 10 may establish an electrical connection to the keyboard device 20 through the electrical connector 107.

The processor 13/23 may include at least one processing unit, for example, a central processing unit (Central Processing Unit, CPU), a graphics processing unit (Graphics Processing Unit, GPU), a digital signal processor (Digital Signal Processor, DSP), a microprocessor (Micro-programmed Control Unit, MCU), an artificial intelligence (Artificial Intelligence, AI) processor, or a programmable logic device (Field Programmable Gate Array, FPGA). Different processing units may be independent components, or may be integrated into one or more processors. The processor 13/23 may be configured to execute instructions of the power supply method provided in embodiments of this application.

It may be understood that structures of the processor 13 and the processor 23 may be the same or may be different.

The memory 101A/101B may include a volatile memory, for example, a random-access memory (Random-Access Memory, RAM), or a double data rate synchronous dynamic random access memory (Double Data Rate Synchronous Dynamic Random Access Memory, DDR SDRAM), and may include a nonvolatile memory, for example, a hard disk drive (Hard Disk Drive, HDD), a compact disc (Compact Disc, CD), a digital versatile disc (Digital Versatile Disc, DVD), or a solid-state drive (Solid-State Drive, SSD). In some embodiments, the memory 101A/101B may be configured to store instructions and data of the power supply method provided in embodiments of this application, for example, store the preset current I₀, the preset impedance Z₀, the first preset temperature T1, and the second preset temperature T2.

The interface module 102A/102B includes an interface for connecting the two-in-one computer 1 to another device, for example, a universal serial bus (Universal Serial Bus, USB) interface, a local area network (Local Area Network, LAN) interface, or a high definition multimedia interface (High Definition Multimedia Interface, HDMI).

The audio module 103A/103B is configured to convert digital audio information into an analog audio signal for output, and is further configured to convert an analog audio input into a digital audio signal. The audio module 103A/103B may be further configured to encode and decode an audio signal.

The communication module 104A/104B is configured to provide a solution for communication between modules in the two-in-one computer 1 or between the two-in-one computer 1 and another device, including but not limited to a wireless communication solution like 2G/3G/4G/5G, a wireless communication solution like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), NFC, and infrared (infrared, IR), a wired solution, and the like.

The sensor module 105A/105B may include a voltage sensor, a current sensor, a temperature sensor, a resistance/impedance sensor, and the like, and is configured to detect a voltage, a current, a temperature, a resistance/impedance, and the like of each module in the two-in-one computer 1.

The display 106 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

Particularly, in some embodiments, the display 106 may alternatively be a touchscreen.

The power supply module PS-1 and the power supply module PS-2 are configured to supply power to the modules of the two-in-one computer 1. For a specific structure and a power supply manner, refer to the descriptions of the foregoing embodiments. Details are not described herein again.

A part of the electrical connector 107 (for example, the electrical connection part 30) is disposed on the side of the tablet computer 10, and the other part of the electrical connector (for example, the electrical connection part 31) is disposed on the side of the keyboard device, and the electrical connector 107 is configured to implement an electrical connection between the tablet computer 10 and the keyboard device 20, including but not limited to an electrical connection used for power supply and an electrical connection used for communication. The electrical connector 107 may be any electrical connector, including but not limited to a pogo pin, a threaded connector, a bayonet connector, a latch connector, a push-pull connector, an in-line connector, and the like.

The keyboard 108 is configured to provide an input capability for a user after the tablet computer 10 is electrically connected to the keyboard device 20 through the electrical connector 107.

It may be understood that the structure of the two-in-one computer 1 shown in FIG. 8 is merely an example. In some other embodiments, the two-in-one computer 1 may use another structure, or may include more or fewer modules, or may combine or split some modules. This is not limited herein.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to input instructions, to perform functions described in this application and generate output information. The output information may be used in one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level programming language or an object-oriented programming language to communicate with the processing system. The program code can alternatively be implemented in an assembly language or a machine language when needed. The mechanisms described in this application are not limited to the scope of any particular programming language. In either case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed via a network or through another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in the machine (for example, computer)-readable form.

In the accompanying drawings, some structure or method features may be shown in a particular arrangement and/or sequence. However, it should be understood that such a particular arrangement and/or order may not be needed. In some embodiments, these features may be arranged in a manner and/or order different from those/that shown in the descriptive accompanying drawings. In addition, inclusion of the structure or method features in a particular figure does not imply that such features are required in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented through a combination of a plurality of physical units/modules. Physical implementations of these logical units/modules are not the most important, and a combination of functions implemented by these logical units/modules is a key to resolve the technical problem provided in this application. **In** addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A power supply method, applied to a first electronic device, wherein the first electronic device is electrically connected to a second electronic device through an electrical connector, and the method comprises:
when a power supply current for the first electronic device to supply power to the second electronic device meets a preset current condition, and a power supply impedance for the first electronic device to supply power to the second electronic device meets a preset impedance condition, supplying, by the first electronic device, power to the second electronic device at a first power through the electrical connector; or
when the power supply current for the first electronic device to supply power to the second electronic device meets the preset current condition, and the power supply impedance does not meet the preset impedance condition, supplying, by the first electronic device, power to the second electronic device at a second power through the electrical connector, wherein the second power is less than the first power, wherein
the preset current condition comprises that the power supply current is less than a preset power supply current, and the preset impedance condition comprises that the power supply impedance is less than a preset power supply impedance.

2. The method according to claim 1, wherein the method further comprises:
when the power supply current for the first electronic device to supply power to the second electronic device does not meet the preset current condition, stopping, by the first electronic device, supplying power to the second electronic device.

3. The method according to claim 1, wherein the method further comprises:
when a temperature of an area in which the electrical connector is located meets a first temperature condition, reducing a power at which the first electronic device supplies power to the second electronic device; or
when the temperature of the area in which the electrical connector is located meets a second temperature condition, stopping, by the first electronic device, supplying power to the second electronic device.

4. The method according to claim 3, wherein
the first temperature condition comprises: the temperature of the area in which the electrical connector is located is greater than or equal to a first preset temperature, and the temperature of the area in which the electrical connector is located is less than a second preset temperature, wherein the first preset temperature is less than the second preset temperature; and
the second temperature condition comprises: the temperature of the area in which the electrical connector is located is greater than or equal to the second preset temperature.

5. The method according to claim 1, wherein the power supply current is a current flowing from the first electronic device to the electrical connector.

6. The method according to claim 1, wherein the power supply impedance is an impedance of at least a partial circuit that comprises the electrical connector and that is in a circuit in which the first electronic device supplies power to the second electronic device.

7. The method according to claim 6, wherein the power supply impedance is determined based on a voltage between a first sampling point of the first electronic device and a second sampling point of the second electronic device in the circuit in which the first electronic device supplies power to the second electronic device, and the power supply current.

8. The method according to claim 4, wherein the first electronic device comprises a temperature detection unit disposed in the area in which the electrical connector is located, and the temperature of the area in which the electrical connector is located is obtained by the temperature detection unit.

9. The method according to claim 1, wherein the first electronic device comprises a first power supply module, and the second electronic device comprises a second power supply module and a second power consumption module;
the first power supply module comprises a first charging unit, a first battery, and a first power interface, an input end of the first charging unit is electrically connected to the first power interface and one end of a first switch, a charging end of the first charging unit is electrically connected to the first battery, an output end of the first charging unit is electrically connected to one end of a second switch, and the other end of the first switch and the other end of the second switch are electrically connected to the electrical connector;
the second power supply module comprises a second charging unit, an input end of the second charging unit is electrically connected to one end of a third switch, and the other end of the third switch is electrically connected to the electrical connector; and
the supplying, by the first electronic device, power to the second electronic device at a first power through the electrical connector comprises:
when the first power interface is not connected to a power adapter, setting the first charging unit to be in a discharging mode, setting the second charging unit to be in a charging mode, setting a maximum power of the second charging unit to the first power, turning on the second switch and the third switch, and supplying power to the second electronic device by using the first battery as a power supply; or
when the first power interface is connected to the power adapter, setting the first charging unit and the second charging unit to be in the charging mode, setting the maximum power of the second charging unit to the first power, turning on the first switch and the third switch, or turning on the second switch and the third switch, and supplying power to the second electronic device by using the power adapter as the power supply.

10. The method according to claim 9, wherein the supplying, by the first electronic device, power to the second electronic device at a second power through the electrical connector comprises:
when the first power interface is not connected to the power adapter, setting the first charging unit to be in the discharging mode, setting the second charging unit to be in the charging mode, setting the maximum power of the second charging unit to the second power, turning on the second switch and the third switch, and supplying power to the second electronic device by using the first battery as the power supply; or
when the first power interface is connected to the power adapter, setting the first charging unit and the second charging unit to be in the charging mode, setting the maximum power of the second charging unit to the second power, turning on the first switch and the third switch, or turning on the second switch and the third switch, and supplying power to the second electronic device by using the power adapter as the power supply.

11. The method according to claim 10, wherein the second power supply module further comprises a second battery and a second power interface, the input end of the second charging unit is further electrically connected to the second power interface, and a charging end of the second charging unit is electrically connected to the second battery; and
when the first power interface is connected to the power adapter and the second power interface is not connected to a power adapter, or neither the first power interface nor the second power interface is connected to a power adapter and a state of charge of the first battery is higher than a state of charge of the second battery, the first electronic device supplies power to the second electronic device at the first power or the second power through the electrical connector.

12. The method according to claim 1, wherein the electrical connector comprises any one of the following electrical connectors: a pogo pin, a threaded connector, a bayonet connector, a latch connector, a push-pull connector, and an in-line connector.

13. The method according to claim 1, wherein the first electronic device is a keyboard device or a tablet computer, and the second electronic device is a tablet computer or a keyboard device.

14. A power supply method, applied to an electronic device, wherein the electronic device comprises a first component and a second component, the first component is electrically connected to the second component through an electrical connector, and the method comprises:
when a power supply current for the first component to supply power to the second component meets a preset current condition, and a power supply impedance for the first component to supply power to the second component meets a preset impedance condition, supplying, by the first component, power to the second component at a first power through the electrical connector; or
when the power supply current for the first component to supply power to the second component meets the preset current condition, and the power supply impedance does not meet the preset impedance condition, supplying, by the first component, power to the second component at a second power through the electrical connector, wherein the second power is less than the first power, wherein
the preset current condition comprises that the power supply current is less than a preset power supply current, and the preset impedance condition comprises that the power supply impedance is less than a preset power supply impedance.

15. The method according to claim 14, wherein the method further comprises:
when a temperature of an area in which the electrical connector is located meets a first temperature condition, reducing a power at which the first component supplies power to the second component; or
when the temperature of the area in which the electrical connector is located meets a second temperature condition, stopping, by the first component, supplying power to the second component.

16. The method according to claim 15, wherein
the first temperature condition comprises: the temperature of the area in which the electrical connector is located is greater than or equal to a first preset temperature, and the temperature of the area in which the electrical connector is located is less than a second preset temperature, wherein the first preset temperature is less than the second preset temperature; and
the second temperature condition comprises: the temperature of the area in which the electrical connector is located is greater than or equal to the second preset temperature.

17. A readable medium, wherein the readable medium stores instructions, and when the instructions are executed on an electronic device, the electronic device is enabled to implement the power supply method according to any one of claims 1 to 13 or claims 14 to 16.

18. An electronic device, comprising:
a memory, configured to store instructions executed by one or more processors of the electronic device; and
a processor, being one of the processors of the electronic device, configured to execute the instructions stored in the memory to implement the power supply method according to any one of claims 1 to 13 or claims 14 to 16.
